# EUROPÄISCHE PATENTSCHRIFT

(11) **EP 4 103 289 B1**
(45) Veröffentlichungstag und Bekanntmachung des Hinweises auf die Patenterteilung: **08.04.2026**
(21) Anmeldenummer: 21706224.9
(22) Anmeldetag: 15.02.2021
(51) Int. Cl.: A62C 3/00, A62C 3/16, A62C 35/58, H02S 20/23, H02S 40/10

(54) **BRANDLÖSCHSYSTEM FÜR EIN DACH MIT EINER SOLARANLAGE**
FIRE EXTINGUISHING SYSTEM FOR A ROOF WITH A SOLAR INSTALLATION
SYSTÈME D'EXTINCTION D'INCENDIE POUR UN TOIT AVEC UNE INSTALLATION SOLAIRE

(30) Priorität: 13.02.2020 DE 102020103814
(43) Veröffentlichungstag der Anmeldung: 21.12.2022
(73) Patentinhaber: Minimax Viking Patent Management GmbH, 23840 Bad Oldesloe (DE)
(72) Erfinder: BÖKE, Joachim, 23840 Bad Oldesloe (DE); SCHRÖDER, Oliver, 23840 Bad Oldesloe (DE); DENKERT, Niels, 23840 Bad Oldesloe (DE)
(74) Vertreter: Eisenführ Speiser
(86) Internationale Anmeldenummer: PCT/EP2021/053674
(87) Internationale Veröffentlichungsnummer: WO 2021/160890

(56) Entgegenhaltungen:
- WO-A1-02/00303
- WO-A2-2005/042105
- DE-A1- 102010 050 589
- US-A- 5 263 543
- US-B1- 7 909 111

## Beschreibung

Die Erfindung bezieht sich auf ein Brandlöschsystem für ein Dach mit einer Solaranlage.

Die Erfindung bezieht sich des Weiteren auf ein Solaranlagensystem mit dem Brandlöschsystem und mindesten einem Solarpanel.

US 7,909,111 B1 offenbart ein Brandschutzsystem mit einzelnen Gruppen von Wasserauslässen auf einer Dachstruktur eines Gebäudes, wobei eine Gruppe von Wasserauslässen, die einen Bereich abdeckt, in dem eine Temperaturerhöhung oberhalb eines Schwellwerts detektiert wird, Löschmittel ausbringen kann, ohne dass die anderen Gruppen von Wasserauslässen Wasser ausbringen. WO 02/00303 A1 offenbart ein brandschutzgerechtes Tragwerk mit einer Vielzahl von Sprühdüsen, wobei Randbereiche von Austrittskegeln benachbarter Sprühdüsen sich gegenseitig durchdringen. WO 2005/042105 A2 offenbart ein Brandschutzsystem, in dem Schaum als Löschmittel verwendet wird. DE 10 2010 050 589 A1 offenbart eine Vorrichtung zum Brandschutz eines dachinstallierten Solarkollektorsystems, die aus mehreren Solarmodulen und einer unterhalb der Solarmodule angeordneten Brandschutzeinrichtung besteht.

Die Löschung eines Brandes auf einem Dach mit einer Solaranlage ist häufig problematisch, da auf dem Dach auftretende Winde die Brandlöschung erschweren können und unter Umständen relativ viel Löschmittel von oben in das Gebäude eindringen kann.

Es ist daher eine Aufgabe der vorliegenden Erfindung, ein Brandlöschsystem bereitzustellen, das eine verbesserte Löschung eines Brandes auf einem Dach mit einer Solaranlage ermöglicht.

Die Aufgabe wird durch ein Brandlöschsystem für ein Dach mit einer Solaranlage gelöst, nach den unabhängigen Ansprüche 1 und 3.

Die auf dem Dach zu erwartenden Winde können dazu führen, dass der Detektionsort, das heißt der Ort, an dem der Brand detektiert worden ist, nicht exakt mit dem realen Brandort übereinstimmt. Wenn die Detektionseinrichtung beispielsweise einen Wärmemelder aufweist, kann sich der Detektionsort aufgrund der Veränderung der Konvektionsströme durch die Winde von dem realen Brandort unterscheiden. Auch wenn die Detektionseinrichtung andere Detektortypen aufweist, kann Wind zu einem im Vergleich zu dem eigentlichen Brandort verschobenen Detektionsort führen. Wenn zum Beispiel ein Rauchmelder verwendet wird, können Rauchschwadenverwehungen in einer derartigen Verschiebung des Detektionsortes resultieren. Bei der Benutzung eines auf Strahlung basierenden Detektors wie eines IR- und/oder UV-Melders kann der Wind eine Flammenverzerrung und damit auch einen verschobenen Detektionsort bewirken.

Der im Vergleich zum tatsächlichen Brandort verschobene Detektionsort kann grundsätzlich dazu führen, dass zum Löschen ein Löschbereich aktiviert wird, der zwar den Detektionsort abdeckt, aber nicht den realen Brandort. Dieses Problem tritt insbesondere in Grenzbereichen der Gruppen auf, in denen unterschiedliche Löschbereiche aneinandergrenzen. Um diesem Problem entgegenzutreten, überlappen sich die Löschbereiche.

Da die Gruppen von Löschmittelauslässen getrennt adressiert werden können, ist es möglich, in den einzelnen Löschbereichen unabhängig voneinander zu löschen. Es ist daher nicht notwendig, ein Löschmittel immer auf das gesamte Dach auszubringen, wodurch ein Eindringen von Löschmittel in ein Gebäude vermindert werden kann. Das Löschmittel kann beispielsweise lediglich in einem oder in mehreren bestimmten Löschbereichen ausgebracht werden.

Die Löschbereiche können auch als Gruppenwirkflächen aufgefasst werden. Die Löschbereiche bzw. Gruppenwirkflächen können beispielsweise gebildet werden, indem i) ein erster Satz von Löschmittelauslässen mit Löschdüsen zum Ausbringen des Löschmittels in einem ersten Löschbereich angeordnet und über ein erstes Rohrsystem miteinander verbunden ist, ii) ein zweiter Satz von Löschmittelauslässen mit Löschdüsen zum Ausbringen des Löschmittels in einem zweiten Löschbereich angeordnet und über ein zweites Rohrsystem miteinander verbunden ist, iii) ein dritter Satz von Löschmittelauslässen mit Löschdüsen zum Ausbringen des Löschmittels in einem dritten Löschbereich angeordnet und über ein drittes Rohrsystem miteinander verbunden ist, et cetera. Die Löscheinrichtung ist bevorzugt so ausgebildet, dass das Löschmittel zumindest durch Löschmittelauslässe einer selben Gruppe gleichzeitig ausgebracht wird. Die Löschbereiche, das heißt die Gruppenwirkflächen, erstrecken sich jeweils bevorzugt über mindestens 50 m².

Das Dach ist bevorzugt ein Flachdach. Das Dach hat also bevorzugt eine Dachneigung von weniger als 10°.

Es ist zudem bevorzugt, dass jedem Löschbereich ein Rohrsystem zum Führen des Löschmittels zu den jeweiligen Löschmittelauslässen zugeordnet ist, wobei das Rohrsystem eines Löschbereichs so ausgebildet ist, dass die Löschmittelauslässe entlang mindestens einer Linie angeordnet sind, die in eine Führungsrichtung verläuft, wobei das Rohrsystem eines anderen Löschbereichs ebenfalls so ausgebildet ist, dass Löschmittelauslässe entlang mindestens einer Linie angeordnet sind, die in die Führungsrichtung verläuft, wobei die Löschbereiche in Führungsrichtung überlappen.

Solarpanels werden häufig in Reihen auf einem Dach angeordnet, wobei es dann sinnvoll ist, das Brandlöschsystem zusammen mit der Solaranlage so auf dem Dach zu installieren, dass die Solarpanel-Reihen auch in Führungsrichtung ausgerichtet sind. Insbesondere wenn Solarpanels derart entlang einer bestimmten Richtung, die hier mit Führungsrichtung bezeichnet wird, angeordnet werden, ist anzunehmen, dass auch Winde auf dem Dach im Allgemeinen zumindest zum Teil entlang dieser Führungsrichtung geführt werden. Der durch den Wind verursachte unerwünschte Effekt der Abweichung des Detektionsortes vom tatsächlichen Brandort tritt dann am wahrscheinlichsten und am stärksten in dieser Führungsrichtung auf. Um diesem Effekt entgegenzuwirken, erfolgt die Überlappung der Löschbereiche daher bevorzugt zumindest in dieser Führungsrichtung. In einer bevorzugten Ausführungsform hat der Überlappungsbereich in Führungsrichtung eine Länge von mindestens 2 m, weiter bevorzugt von mindestens 3 m.

Sich überlappende Löschbereiche sind bevorzugt in Führungsrichtung nebeneinander angeordnet, wobei die Löschmittelauslässe unterschiedlicher Gruppen, die den sich überlappenden Löschbereichen zugeordnet sind, bevorzugt entlang von Linien angeordnet sind, die senkrecht zu der Führungsrichtung zueinander versetzt sind. Ein erster Satz von Linien einer ersten Gruppe von Löschmittelauslässen, die einem erstem Löschbereich zugeordnet sind, und ein zweiter Satz von Linien einer zweiten Gruppe von Löschmittelauslässen, die einem zweiten Löschbereich zugeordnet sind, der mit dem ersten Löschbereich überlappt, greifen bevorzugt ineinander. Mit anderen Worten, von den Löschmittelauslässen der ersten Gruppe sind zumindest diejenigen Löschmittelauslässe, die am weitesten in Richtung der zweiten Gruppe angeordnet sind, a) an derselben Position, bezogen auf die Führungsrichtung, wie diejenigen Löschmittelauslässe der zweiten Gruppe von Löschmittelauslässen, die am weitesten in Richtung der ersten Gruppe angeordnet sind, oder b) an einer Position, bezogen auf die Führungsrichtung, die noch weiter in Richtung der zweiten Gruppe verschoben ist, angeordnet.

Es ist außerdem bevorzugt, dass das Brandlöschsystem eine Steuerung aufweist, die ausgebildet ist, die Löscheinrichtung in Abhängigkeit von dem Detektionsort zu steuern. Die Steuerung ist insbesondere ausgebildet, zu bestimmen, in welchem Löschbereich sich der Detektionsort befindet und die Löscheinrichtung so zu steuern, dass das Löschmittel in dem bestimmten Löschbereich ausgebracht wird. Wenn sich der Detektionsort in einem Überlappungsbereich befindet, in dem sich Löschbereiche überlappen, so werden diese überlappenden Löschbereiche bestimmt und in diesen Löschbereichen wird das Löschmittel ausgebracht. Es können auch ein oder mehrere Detektionsorte in einem nicht-überlappenden Teil eines Löschbereichs detektiert werden. In diesem Fall wird dieser Löschbereich bestimmt und das Löschmittel nur in diesem Löschbereich ausgebracht. Die Steuerung ist bevorzugt ausgebildet, die Löscheinrichtung so zu steuern, dass das Löschmittel, wenn mehrere Löschbereiche bestimmt worden sind, in allen bestimmten Löschbereichen gleichzeitig ausgebracht wird.

Die Detektionseinrichtung kann ausgebildet sein, einen Brand mittels Strahlungswärme und/oder mittels konvektiver Wärmeübertragung zu detektieren. Die Detektionseinrichtung umfasst bevorzugt mehrere Detektoren, die an verschiedenen Detektionsorten angeordnet und jeweils einem Löschbereich und im Überlappungsbereich mehreren Löschbereichen zugeordnet sind. Diese Zuordnungen sind der Steuerung bekannt. Die Zuordnungen können beispielsweise in der Steuerung oder in einem separaten Speicher, mit dem die Steuerung verbunden ist, gespeichert sein. Aufgrund der Zuordnungen kann die Steuerung sofort erkennen, in welchem Löschbereich ein Detektionsort detektiert worden ist, und die zur Löschung bestimmten Löschbereiche unmittelbar aktivieren.

In einer Ausführungsform ist der Steuerung auch bekannt, welcher Detektor sich an welchem Detektorort befindet. Auch die Orte der Löschbereiche können der Steuerung in einer Ausführungsform bekannt sein. Die Informationen können beispielsweise bei der Installation des Brandlöschsystems in die Steuerung oder in einen Speicher, der mit der Steuerung verbunden ist, eingegeben werden. Die Steuerung kann dann angepasst sein, diese Ortsinformationen zu verwenden, um die zu aktivierenden Löschbereiche zu bestimmen.

Die Löschmittelauslässe umfassen Löschdüsen, die wechselweise in entgegengesetzte Richtungen weisen und einen horizontalen Abstrahlwinkel kleiner als 360° aufweisen. Es ist bevorzugt, dass der horizontale Abstrahlwinkel kleiner oder gleich 270° ist, und es ist besonders bevorzugt, dass der horizontale Abstrahlwinkel kleiner oder gleich 180° ist. Würden Löschdüsen verwendet, die jeweils einen horizontalen Abstrahlwinkel von 360° haben, dann wären keine wechselnden Abstrahlrichtungen zwischen benachbarten Löschdüsen vorhanden. Diese Löschdüsen mit einer 360°-Abstrahlcharakteristik haben in der Regel bei gleichem Druck eine geringere Reichweite als zwei wechselseitig angeordnete Löschdüsen mit einem horizontalen Abstrahlwinkel, der kleiner ist als beispielsweise 180°, wodurch sich letztlich die benötigte Menge an Rohren pro Löschbereich erhöhen könnte. Die wechselseitige Verwendung von Löschdüsen mit einem horizontalen Abstrahlwinkel, der kleiner ist als 360°, ermöglicht daher eine großflächige Ausbringung von Löschdüsen mit relativ wenig Rohren.

Die Löschmittelauslässe umfassen bevorzugt Löschdüsen mit einem flachen Sprühkegel, um eine möglichst schnelle gleichmäßig Bedeckung des Daches mit dem Löschmittel zu erreichen. Ein Sprühkegel wird insbesondere dann als flach betrachtet, wenn der vertikale Abstrahlwinkel kleiner ist als der horizontale Abstrahlwinkel. In einer bevorzugten Ausführungsform ist der horizontale Abstrahlwinkel gleich des Zweifachen des vertikalen Abstrahlwinkels. Auch hier ist es besonders bevorzugt, dass der horizontale Abstrahlwinkel kleiner oder gleich 180° ist.

Der Abstrahlwinkel ist hier der Öffnungswinkel des Sprühbildes, wobei vertikal und horizontal relativ zur Dachoberfläche zu verstehen sind. Das Sprühbild ist bei Öffnungswinkeln, die kleiner sind als 180°, ein Kegel.

Es ist weiterhin bevorzugt, dass die Detektionseinrichtung mehrere Detektoren zum Detektieren des Ortes aufweist, an dem ein Brand aufgetreten ist oder wahrscheinlich auftreten wird, wobei die Detektoren entlang gerader Linien angeordnet sind. Die Detektoren entlang der geraden Linien bilden bevorzugt Wärmemelder, das heißt linienförmige Wärmemelder, die bevorzugt rücksetzbar sind. Die Detektoren sind demnach bevorzugt Wärmedetektoren, wobei ein Brand oder ein wahrscheinliches Auftreten eines Brandes an einem Detektorort und damit der Detektionsort auf Basis einer Wärmemessung bestimmt werden können. Beispielsweise kann ein Detektionsort detektiert werden, wenn an diesem Ort die gemessene Wärme und/oder ein gemessener Wärmegradient einen vorbestimmten Grenzwert überschritten hat. Bevorzugt misst der Detektor die Wärme auf Basis einer Temperaturmessung, so dass ein Detektionsort detektiert werden kann, wenn an diesem Ort die gemessene Temperatur und/oder ein Temperaturgradient einen Grenzwert überschreitet. Es können auch andere Detektoren verwendet werden. So können die Detektoren beispielsweise als Rauchmelder ausgebildet sein, bevorzugt als linienförmige Rauchmelder oder als Ansaugrauchmelder.

In einer bevorzugten Ausführungsform sind die Detektoren entlang gerader Linien angeordnet, die in Führungsrichtung verlaufen. Wie oben ausgeführt worden ist, tritt der durch den Wind verursachte unerwünschte Effekt der Abweichung des Detektionsortes vom tatsächlichen Brandort am wahrscheinlichsten und am stärksten in dieser Führungsrichtung auf. Eine möglichst genaue Branddetektion in dieser Führungsrichtung kann daher das Brandlöschsystem weiter verbessern.

Die Löscheinrichtung kann ausgebildet sein, Wasser oder Löschschaum als Löschmittel zu verwenden. Bei der Verwendung von Löschschaum als Löschmittel dringt das Löschmittel weniger oder nicht in das Dach ein, wodurch Löschschäden vermindert werden können. Die Verwendung von Wasser als Löschmittel ermöglicht eine technisch einfachere Konstruktion der Löscheinrichtung. Wenn als Löschmittel Wasser verwendet wird, umfasst die Löscheinrichtung bevorzugt ein Rohrsystem und ein Wasserventil, wobei das Rohrsystem ausgebildet ist, Wasser von dem Wasserventil zu den Löschmittelauslässen zu führen.

Wenn als Löschmittel Löschschaum verwendet wird, umfasst die Löscheinrichtung bevorzugt ein Rohrsystem, ein Wasserventil und einen Schaumerzeuger zum Erzeugen von Löschschaum, wobei das Rohrsystem ausgebildet ist, Wasser von dem Wasserventil zu dem Schaumerzeuger und Löschschaum von dem Schaumerzeuger zu den Löschmittelauslässen zu führen. Der Schaumerzeuger saugt zum Erzeugen des Löschschaums Luft ein und kann den Löschschaum mit einer relativ geringen Verschäumungszahl erzeugen, so dass Löschschaum mit dieser relativ geringen Verschäumungszahl von dem Schaumerzeuger zu den Löschmittelauslässen transportiert wird. Als Schaumerzeuger kann beispielsweise ein unter dem Produktnamen "Viking Schaumerzeuger" bekannter Schaumerzeuger verwendet werden. Das Schaummittel kann beispielsweise ein synthetisches Tensidschaummittel oder ein Proteinschaummittel sein. Es können aber auch andere Schaumerzeuger und/oder andere Schaummittel verwendet werden. Das Wasserventil ist bevorzugt ein Sprühflutventil. Als Sprühflutventile können beispielsweise "Minimax FSX", "Viking Model E-1", "Viking Model E-3", "Viking Model H-1", "Viking Model H-3" oder andere Sprühflutventile verwendet werden. Die Sprühflutventile "Minimax FSX", "Viking Model H-1" und "Viking Model H-3" sind elektrisch rückstellbar. Die Sprühflutventile "Viking Model E-1" und "Viking Model E-3" sind Modelle mit elektrischer Anregung. Das Sprühflutventil umfasst einen Auslösemechanismus, der beispielsweise pneumatisch, elektrisch oder hydraulisch sein kann. In einer bevorzugten Ausführungsform wird ein Magnetventil zum elektrischen Auslösen des Sprühflutventils verwendet. Dies ermöglicht eine besonders zuverlässige Auslösung.

Die Löschmittelauslässe können so ausgebildet sein, dass sie auch zur Schaumerzeugung beitragen. Der Löschschaum kann demnach in zwei Stufen erzeugt werden, wobei in einer ersten Stufe Löschschaum mittels des Schaumerzeugers im Rohrsystem und in einer zweiten Stufe mittels beispielsweise Löschdüsen der Löschschaum weiter erzeugt wird. Die Löschdüsen tragen ohne Fremdenergie zur Schaumerzeugung bei. Dabei wird bevorzugt in der ersten Stufe eine Mindestverschäumung erzeugt, die so bemessen ist, dass der Löschschaum schon allein aufgrund der Mindestverschäumung kaum durch das Dach, insbesondere durch eine Dachhaut, in ein Gebäude dringen kann. Die Verschäumungsanforderung kann dann für die Löschdüsen relativ gering sein. Grundsätzlich ist das Brandlöschsystem bevorzugt so ausgelegt, dass der Verschäumungsgrad nicht so hoch ist, dass der Wind den dann relativ leichten Schaum fortträgt.

In einer bevorzugten Ausführungsform ist der Löschschaum, der schließlich als Löschmittel ausgebracht wird, Schwerschaum mit einer Verschäumungszahl zwischen einschließlich 4 und einschließlich 20 oder Mittelschaum mit einer Verschäumungszahl zwischen 21 und 200. In einer besonders bevorzugten Ausführungsform ist das ausgebrachte Löschmittel Schwerschaum mit der Verschäumungszahl 6. Die Verschäumungszahl ist hierbei das Verhältnis zwischen dem Volumen des schließlich ausgebrachten fertigen Löschschaums zum Volumen des eingesetzten Wasser-Schaummittel-Gemisches. Der verwendete Schwerschaum und der verwendete Mittelschaum haben den Vorteil, dass sie im Vergleich zu Leichtschaum nicht so leicht weggeweht werden können, was insbesondere bei einer Löschung eines Brandes auf einem Dach wichtig ist.

Die Löschmittelauslässe umfassen bevorzugt Löschdüsen. Die Löschdüsen können beispielsweise die Löschdüsen mit der Produktbezeichnung "Viking Model C-1 Window Sprinkler" sein. Die Löschdüsen können auch sogenannte "aspirating sprinklers" sein, wobei hierbei vorzugsweise auf einen zusätzlichen Schaumerzeuger verzichtet werden kann. Die Löschdüsen können auch einen Schaumerzeugungs-Vorsatz aufweisen.

In einer Ausführungsform beträgt der Abstand zwischen zwei benachbarten Löschmittelauslässen einer selben Gruppe maximal 160 cm. In einer anderen Ausführungsform kann dieser Abstand aber auch größer sein.

Die oben genannte Aufgabe wird auch durch ein Brandlöschsystem für ein Dach mit einer Solaranlage gelöst, das aufweist:
- eine Löscheinrichtung mit mehreren Gruppen von Löschmittelauslässen zum Ausbringen eines Löschmittels auf dem Dach, wobei jede Gruppe von Löschmittelauslässen jeweils einem räumlichen Löschbereich zugeordnet ist, wobei die Löscheinrichtung so ausgebildet ist, dass Löschmittel mittels Löschmittelauslässen einer Gruppe ausbringbar ist unabhängig von einem Ausbringen des Löschmittels mittels Löschmittelauslässen einer anderen Gruppe,
- eine Detektionseinrichtung, die ausgebildet ist, als Detektionsort einen Ort, an dem ein Brand aufgetreten ist oder wahrscheinlich auftreten wird, zu detektieren, und
- eine Steuerung, die ausgebildet ist, die Löscheinrichtung in Abhängigkeit von dem Detektionsort zu steuern, wobei, wenn sich der Detektionsort in einem vorab definierten Grenzbereich befindet, der zumindest zwei aneinandergrenzende Teilbereiche unterschiedlicher Löschbereiche umfasst, das Löschmittel in den Löschbereichen, deren Teilbereiche von dem Grenzbereich umfasst sind, ausgebracht wird.

Wie oben ausgeführt worden ist, könnte ein im Vergleich zum tatsächlichen Brandort verschobener Detektionsort grundsätzlich dazu führen, dass zum Löschen ein Löschbereich aktiviert wird, der zwar den Detektionsort abdeckt, aber nicht den realen Brandort. Wie ebenfalls oben ausgeführt worden ist, tritt dieses Problem insbesondere in Grenzbereichen der Gruppen auf, in denen unterschiedliche Löschbereiche aneinandergrenzen. Um diesem Problem entgegenzutreten, können sich Löschbereiche überlappen, aber es ist auch möglich, einen Grenzbereich zu definieren, der zumindest zwei aneinandergrenzende Teilbereiche unterschiedlicher Löschbereiche umfasst, und das Löschmittel in den Löschbereichen, deren Teilbereiche von dem Grenzbereich umfasst sind, auszubringen, wenn sich der Detektionsort im definierten Grenzbereich befindet. Mit anderen Worten, wenn sich der Detektionsort in einem ersten Löschbereich befindet und wenn sich der reale Brandort in einem angrenzenden zweiten Löschbereich befindet, werden dennoch beide Löschbereiche aktiviert, so dass die durch den Wind verursachte Verschiebung des Detektionsortes relativ zum tatsächlichen Brandort nicht zu einer alleinigen Auslösung des falschen, ersten Löschbereichs und damit zu keiner Löschung führt. Wiederum anders ausgedrückt, wenn sich ein Detektionsort, der sich in einem Löschbereich befindet, zudem in einer Entfernung unterhalb einer Grenzentfernung zu einem benachbarten Löschbereich befindet, werden beide Löschbereiche ausgelöst. Bei einer derartigen Verwendung eines Grenzbereiches kann auf eine Überlappung der Grenzbereiche verzichtet werden. Die einzelnen Löschbereiche können also exklusiv aneinandergrenzend angeordnet sein.

Da die Steuerung den vorab definierten Grenzbereich für die Steuerung der Löscheinrichtung verwendet, ist dieser Grenzbereich in der Steuerung hinterlegt beziehungsweise abgespeichert. Der Grenzbereich ist demnach bevorzugt nicht beispielsweise durch physikalische, tatsächlich vorhandene Abgrenzungsmerkmale definiert, sondern er ist ein virtueller Grenzbereich, der in der Steuerung digital gespeichert ist.

In einer bevorzugten Ausführungsform ist die Steuerung so ausgebildet, dass ein Benutzer wie beispielsweise ein Installateur den Grenzbereich modifizieren kann. Dazu kann die Steuerung selbst ein Eingabemittel aufweisen wie beispielsweise ein Tastenfeld. Alternativ oder zusätzlich kann die Steuerung so ausgebildet sein, dass sie über eine Datenverbindung, die insbesondere drahtlos ist, eine Modifizierung des Grenzbereichs ermöglicht. Beispielsweise kann eine mobile Eingabeeinheit mit der Steuerung mittels einer Datenverbindung verbunden sein, um eine Änderung des Grenzbereichs zu ermöglichen. Die mobile Eingabeeinheit kann beispielsweise ein mobiler Computer mit Eingabemitteln sein wie beispielsweise ein Smartphone.

Der Grenzbereich kann ein Rechteck bilden, insbesondere wenn die Löschmittelauslässe eine horizontale 360°-Abstrahlcharakteristik aufweisen. Die Seiten des Grenzbereichs, die parallel zu der Grenze zwischen den Löschbereichen verlaufen, für die der Grenzbereich definiert ist, können demnach jeweils eine Gerade sein. Der Grenzbereich kann aber auch eine andere Form aufweisen. Beispielsweise können die Seiten des Grenzbereichs, die parallel zu der Grenze zwischen den Löschbereichen verlaufen, für die der Grenzbereich definiert ist, jeweils eine Rechteckkurve bilden. Dies kann insbesondere der Fall sein, wenn die Löschmittelauslässe unter einem Winkel abstrahlen, der horizontal kleiner als 360° und insbesondere gleich 180° ist, und das Löschmittel von benachbarten Löschmittelauslässen in, in eine horizontale Ebene projiziert, entgegengesetzte Richtungen ausgebracht wird.

Die Ausdrücke "horizontaler Abstrahlwinkel", "in, in eine horizontale Ebene projiziert, entgegengesetzte Richtungen", et cetera bedeuten nicht, dass die Löschmittelausbringung in exakter horizontaler Richtung erfolgt, sondern sie beziehen sich lediglich auf Richtungs- und Winkelangaben projiziert in eine gedachte horizontale Ebene oder, mit anderen Worten, auf Richtungs- und Winkelangaben, die sich auf eine Blickrichtung "von oben" beziehen. Der Ausdruck "horizontal" ist dabei bevorzugt relativ zu der Dachoberfläche zu verstehen. Eine horizontale Ebene ist demnach eine Ebene, die parallel zu einer Dachoberfläche verläuft. Der Ausdruck "von oben" bezieht sich dann auf eine Blickrichtung, die senkrecht zu der Dachoberfläche verläuft.

In einer Ausführungsform stehen sich die Enden der Rohre unterschiedlicher, aneinander angrenzender Löschbereiche derart gegenüber, dass die jeweils nebeneinanderliegenden, abschließenden Löschdüsen unterschiedlicher Löschbereiche in "von oben betrachtet" entgegengesetzte Richtungen zeigen. Dies ist bevorzugt, da ansonsten direkt auf der Rückseite der nebeneinander liegenden, abschließenden Löschdüsen ein "blinder Fleck" entstehen könnte, das heißt, ein Bereich, in dem kein Löschmittel ausgebracht wird.

Es ist bevorzugt, dass jedem Löschbereich ein Rohrsystem zum Führen des Löschmittels zu den jeweiligen Löschmittelauslässen zugeordnet ist, wobei das Rohrsystem eines Löschbereichs so ausgebildet ist, dass die Löschmittelauslässe entlang mindestens einer Linie angeordnet sind, die in eine Führungsrichtung verläuft, wobei das Rohrsystem eines anderen Löschbereichs ebenfalls so ausgebildet ist, dass Löschmittelauslässe entlang mindestens einer Linie angeordnet sind, die in die Führungsrichtung verläuft, wobei der Grenzbereich derart definiert ist, dass er eine Grenzlinie zwischen aneinander grenzenden Löschbereichen abdeckt, die senkrecht zu der Führungsrichtung verläuft.

Solarpanels werden häufig, wie oben ausgeführt, in Reihen auf einem Dach angeordnet, wobei es dann sinnvoll ist, das Brandlöschsystem zusammen mit der Solaranlage so auf dem Dach zu installieren, dass die Solarpanel-Reihen auch in Führungsrichtung ausgerichtet sind. Insbesondere wenn Solarpanels derart entlang einer bestimmten Richtung, die hier mit Führungsrichtung bezeichnet wird, angeordnet werden, ist, wie ebenfalls oben ausgeführt, anzunehmen, dass auch Winde auf dem Dach im Allgemeinen zumindest zum Teil entlang dieser Führungsrichtung geführt werden. Der durch den Wind verursachte unerwünschte Effekt der Abweichung des Detektionsortes vom tatsächlichen Brandort tritt dann am wahrscheinlichsten und am stärksten in dieser Führungsrichtung auf. Um diesem Effekt entgegenzuwirken, wird der Grenzbereich bevorzugt derart definiert ist, dass er eine Grenze zwischen aneinandergrenzenden Löschbereichen abdeckt, die senkrecht zu der Führungsrichtung verläuft.

Die Breite des Grenzbereichs in Führungsrichtung ist bevorzugt so groß, dass die Detektionseinrichtung in Führungsrichtung und innerhalb des Grenzbereichs unterschiedliche Orte, an denen Brände auftreten könnten, detektieren kann. Das heißt, obwohl der Ort gut detektiert werden kann, ist der Grenzbereich relativ breit, um den oben beschriebenen Windeinflüssen entgegenzuwirken.

Die oben genannte Aufgabe wird auch durch ein Brandlöschsystem für ein Dach mit einer Solaranlage gelöst, das aufweist:
- eine Löscheinrichtung mit einer Gruppe von Löschmittelauslässen zum Ausbringen eines Löschmittels auf dem Dach, wobei die Löschmittelauslässe Löschdüsen umfassen, die wechselweise in entgegengesetzte Richtungen weisend in jeweils einen Abdeckungsbereich Löschmittel ausbringen und einen horizontalen Abstrahlwinkel kleiner als 360° aufweisen, wobei Abdeckungsbereiche benachbarter Löschdüsen der Gruppe überlappen, und
- eine Detektionseinrichtung, die ausgebildet ist, als Detektionsort einen Ort, an dem ein Brand aufgetreten ist oder wahrscheinlich auftreten wird, zu detektieren.

Auch das Überlappen der Abdeckungsbereiche benachbarter Löschdüsen der Gruppe führt zu einer verbesserten Löschung eines Brandes auf einem Dach mit einer Solaranlage. Zudem ermöglicht die wechselseitige Verwendung von Löschdüsen mit einem horizontalen Abstrahlwinkel, der kleiner ist als 360°, eine großflächige Ausbringung von Löschdüsen mit relativ wenig Rohren, wie oben bereits ausgeführt worden ist. Bevorzugt ist der horizontale Abstrahlwinkel kleiner oder gleich 270°. Es ist besonders bevorzugt, dass der horizontale Abstrahlwinkel kleiner oder gleich 180° ist.

Auch die Detektionseinrichtung für dieses Brandlöschsystem kann ausgebildet sein, einen Brand mittels Strahlungswärme und/oder mittels konvektiver Wärmeübertragung zu detektieren. Zudem kann auch dieses Brandlöschsystem eine Steuerung aufweisen, die ausgebildet ist, die Löscheinrichtung in Abhängigkeit von einem Detektionsort zu steuern. Auch weitere Merkmale der Detektionseinrichtung und der Steuerung, die oben beschrieben worden sind, kann dieses Brandlöschsystem aufweisen.

Dieses Brandlöschsystem kann eine oder mehrere Gruppen von Löschmittelauslässen aufweisen. In einer Ausführungsform umfasst die Löscheinrichtung mehrere Gruppen von Löschmittelauslässen zum Ausbringen eines Löschmittels auf dem Dach, wobei die Löscheinrichtung so ausgebildet ist, dass a) das Löschmittel mittels Löschmittelauslässen einer Gruppe ausbringbar ist unabhängig von einem Ausbringen des Löschmittels mittels Löschmittelauslässen einer anderen Gruppe und b) das Löschmittel mittels Löschmittelauslässen der anderen Gruppe ausbringbar ist abhängig von einem Ausbringen des Löschmittels mittels Löschmittelauslässen der einen Gruppe. In dieser Ausführungsform ist es nicht notwendig, jede Gruppe von Löschmittelauslässen separat und vollständig unabhängig von anderen Gruppen von Löschmittelauslässen mit Löschmittel zu versorgen, was zu einer vereinfachten Konstruktion der Löscheinrichtung führen kann. Beispielsweise kann die Löscheinrichtung ein Rohrsystem mit Löschmittelauslässen der Gruppen aufweisen, wobei beispielsweise ein erster Abschnitt des Rohrsystems eine erste Gruppe von Löschmittelauslässen und ein zweiter Abschnitt des Rohrsystems eine zweite Gruppe von Löschmittelauslässen aufweist. Die Löscheinrichtung kann dann des Weiteren so ausgebildet sein, dass das Löschmittel dem ersten Abschnitt des Rohrsystems zugeführt wird und über diesem ersten Abschnitt auch dem zweiten Abschnitt des Rohrsystems zugeführt werden kann, wobei sich zwischen dem ersten Abschnitt des Rohrsystems und dem zweiten Abschnitt des Rohrsystems ein steuerbares Ventil befindet. Wenn das Löschmittel dem ersten Abschnitt des Rohrsystems zugeführt wird und das steuerbare Ventil geschlossen ist, tritt das Löschmittel nur aus Löschmittelauslässen der ersten Gruppe aus. Wenn das Löschmittel dem ersten Abschnitt des Rohrsystems zugeführt wird und das steuerbare Ventil geöffnet ist, wird das Löschmittel auch über die Löschmittelauslässe des zweiten Abschnitts des Rohrsystems ausgebracht.

In einer weiteren Ausführungsform ist die Löscheinrichtung so ausgebildet, dass a) das Löschmittel mittels Löschmittelauslässen einer Gruppe ausbringbar ist unabhängig von einem Ausbringen des Löschmittels mittels Löschmittelauslässen einer anderen Gruppe und b) das Löschmittel mittels Löschmittelauslässen der anderen Gruppe ausbringbar ist unabhängig von einem Ausbringen des Löschmittels mittels Löschmittelauslässen der einen Gruppe. Dies ermöglicht eine gezieltere Anwendung des Löschmittels und kann daher zu einer geringeren Menge an Löschmittel führen, die zur Brandlöschung benötigt wird, wodurch wiederum mögliche Schäden durch das Löschmittel reduziert werden können.

Die Löscheinrichtung kann so ausgebildet sein, dass jeder Löschmittelauslass das Löschmittel in einen jeweiligen Abdeckungsbereich ausbringt, wobei ein Überlappungsbereich von Abdeckungsbereichen zweier benachbarter Löschmittelauslässe einer selben Gruppe kleiner ist als ein Überlappungsbereich von Abdeckungsbereichen benachbarter Löschmittelauslässe unterschiedlicher Gruppen. Dies ermöglicht eine weiter verbesserte Löschung eines Brandes auf einem Dach mit einer Solaranlage.

Der Vergleich der Überlappungsbereiche bezieht sich bevorzugt auf eine Projektion der Abdeckungsbereiche in eine horizontale Ebene. Mit anderen Worten, er bezieht sich bevorzugt auf eine Abmessung der Abdeckungsbereiche und Überlappungsbereiche betrachtet "von oben". Die "horizontale" Ebene ist hierbei bevorzugt eine Ebene, wie oben ausgeführt, die parallel zur Dachoberfläche verläuft. Der Überlappungsbereich von Abdeckungsbereichen zweier benachbarter Löschmittelauslässe einer selben Gruppe bezieht sich, wenn dieser Überlappungsbereich nicht konstant ist für verschiedene benachbarte Löschmittelauslässe, bevorzugt auf einen arithmetischen Mittelwert oder den größten Überlappungsbereich zweier benachbarter Löschmittelauslässe einer selben Gruppe. Auch der Überlappungsbereich von Abdeckungsbereichen benachbarter Löschmittelauslässe unterschiedlicher Gruppen ist bevorzugt ein arithmetischer Mittelwert von Überlappungsbereichen von Abdeckungsbereichen benachbarter Löschmittelauslässe unterschiedlicher Gruppen oder der maximale Überlappungsbereich von Abdeckungsbereichen benachbarter Löschmittelauslässe unterschiedlicher Gruppen, wenn diese Überlappungsbereiche von Abdeckungsbereichen benachbarter Löschmittelauslässe unterschiedlicher Gruppen nicht alle gleich sind.

Der Ausdruck "benachbarte Löschmittelauslässe" bezieht sich bevorzugt auf eine Nachbarschaft in Richtung einer jeweiligen Rohrleitung, an der die jeweiligen Löschmittelauslässe angeordnet sind. Die Rohrleitungen sind wiederum bevorzugt in Richtung der oben genannten Führungsrichtung orientiert, so dass sich der Ausdruck "benachbarte Löschmittelauslässe" bevorzugt auf eine Nachbarschaft in Führungsrichtung bezieht.

In einer bevorzugten Ausführungsform ist der Überlappungsbereich von Abdeckungsbereichen benachbarter Löschmittelauslässe unterschiedlicher Gruppen mindestens doppelt so groß wie der Überlappungsbereich von Abdeckungsbereichen zweier benachbarter Löschmittelauslässe einer selben Gruppe.

Die Erfindung bezieht sich zudem auf ein Solaranlagensystem für ein Dach, wobei das Solaranlagensystem das Brandlöschsystem und mindestens ein Solarpanel umfasst. Bevorzugt umfasst das Solaranlagensystem mehrere Solarpanels, die nebeneinander in Führungsrichtung angeordnet sind.

Es ist bevorzugt, dass die Detektionseinrichtung mehrere Detektoren zum Detektieren des Detektionsortes aufweist, wobei die Detektoren derart an dem Solarpanel angebracht sind, dass die Detektoren nach Anbringung auf dem Dach unterhalb des Solarpanels angeordnet sind. Insbesondere ist das Solarpanel derart schräg auf dem Dach angeordnet, dass es eine obere Seite und eine gegenüberliegende untere Seite aufweist, wobei die Detektoren unterhalb des Solarpanels im Bereich der oberen Seite angeordnet sind. Hierdurch werden die Detektoren vor zu starker Sonneneinstrahlung geschützt, wodurch die Lebensdauer der Detektoren erhöht und die Wahrscheinlichkeit einer durch die Sonneneinstrahlung verursachten fehlerhaften Branddetektion reduziert werden kann.

Die Löscheinrichtung ist bevorzugt so ausgebildet, dass, nach Anbringung des Solaranlagensystems auf dem Dach, die Löschmittelauslässe unterhalb des Solarpanels so angeordnet sind, dass das Löschmittel in einen Bereich unterhalb des Solarpanels ausbringbar ist. Die Löschmittelauslässe weisen bevorzugt Löschdüsen auf, die das Löschmittel in den Bereich unterhalb des Solarpanels spritzen. Wenn das Solarpanel, wie oben beschrieben, schräg auf dem Dach angeordnet ist, entspricht der Abstand zwischen den Löschmittelauslässen und dem Dach bevorzugt zwei Drittel des Abstandes zwischen der oberen Seite des Solarpanels und dem Dach. Insbesondere entspricht der Abstand der Löschmittelauslässe zwei Drittel des Abstandes zwischen einer unteren Kante der oberen Seite des Solarpanels und dem Dach.

Im Weiteren werden Ausführungsformen der Erfindung unter Bezugnahme auf folgende Figuren beschrieben, wobei
- Fig. 1: schematisch und exemplarisch Komponenten eines Solaranlagensystems für ein Dach mit einem Brandlöschsystem und mehreren Solarpanels in einer ersten Ansicht illustriert,
- Fig. 2: eine zweite schematische und exemplarische Ansicht der in Fig. 1 illustrierten Komponenten zeigt,
- Fig. 3: eine dritte schematische und exemplarische Ansicht der in Fig. 1 illustrierten Komponenten zeigt,
- Fig. 4: schematisch und exemplarisch weitere Komponenten eines Solaranlagensystems mit einem Brandlöschsystem illustriert,
- Fig. 5: schematisch und exemplarisch überlappende Löschbereiche eines Brandlöschsystems darstellt,
- Fig. 6: schematisch und exemplarisch einen Grenzbereich zwischen aneinandergrenzenden Löschbereichen darstellt,
- Fig. 7: schematisch und exemplarisch eine bestimmte Anordnung von Solarpanels auf einem Dach zeigt,
- Fig. 8: schematisch und exemplarisch Komponenten einer Ausführungsform eines Brandlöschsystems für ein Dach mit einer Solaranlage illustriert und
- Fig. 9: schematisch und exemplarisch Komponenten einer weiteren Ausführungsform eines Brandlöschsystems für ein Dach mit einer Solaranlage illustriert.

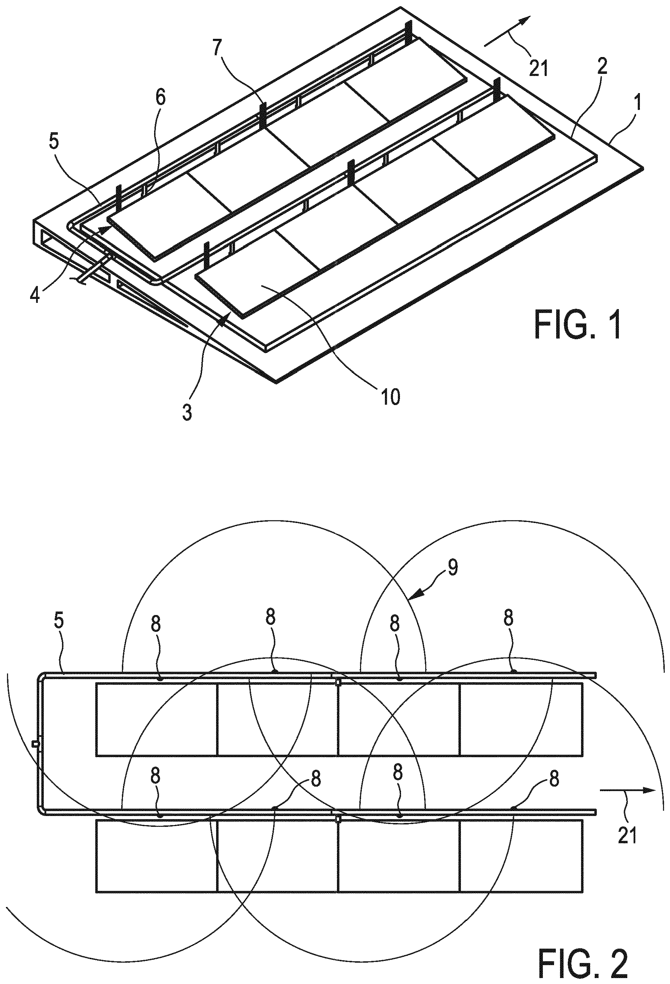

Fig. 1 illustriert schematisch und beispielhaft Komponenten eines Solaranlagensystems auf einem Dach 1, wobei das Solaranlagensystem mehrere Solarpanels 10 und ein Brandlöschsystem umfasst. Die Solarpanels 10 sind in dieser Ausführungsform in zwei Reihen 3, 4 angeordnet und auf einer Platte 2 montiert, die wiederum auf dem Dach 1 befestigt ist. Das Brandlöschsystem umfasst eine Löscheinrichtung, von der in Fig. 1 horizontal verlaufende Rohre 5 zum Zuführen eines Löschmittels zu dem Dach 1 und vertikal verlaufende Rohre 6 gezeigt sind, an deren Enden Löschmittelauslässe mit Löschmitteldüsen angeordnet sind. Das Löschmittel wird demnach über die horizontal verlaufenden Rohre 5 und dann über die vertikal verlaufenden Rohre 6 zu den Löschmittelauslässen mit den Löschdüsen geführt, wobei die Löschmittelauslässe an den Enden der vertikalen Rohre 6 in dieser Abbildung in zwei Linien angeordnet sind, die in eine sogenannte Führungsrichtung 21 verlaufen. Gehalten werden die Solarpanels 10 und die horizontalen Rohre 5 mittels Stützstreben 7.

Das Dach 1 ist ein Flachdach, das heißt ein Dach, das eine Dachneigung von weniger von 10° hat.

Fig. 2 zeigt schematisch und beispielhaft eine Draufsicht auf die in Fig. 1 gezeigten Komponenten. Insbesondere zeigt Fig. 2 die in zwei Linien angeordneten Löschmittelauslässe 8 zusammen mit ihren jeweiligen Abdeckungsbereichen 9. In diesem Beispiel umfasst jeder Löschmittelauslass 8 eine Löschdüse, die einen horizontalen Abstrahlwinkel von 180° hat, wobei entlang eines Rohres benachbarte Löschmittelauslässe 8 Löschdüsen aufweisen, die in "von oben betrachtet" entgegengesetzte Richtungen abstrahlen. Diese in eine gedachte horizontale Ebene projizierten Richtungen sind senkrecht zu dem Verlauf der horizontalen Rohre 5 und damit senkrecht zu der Führungsrichtung 21.

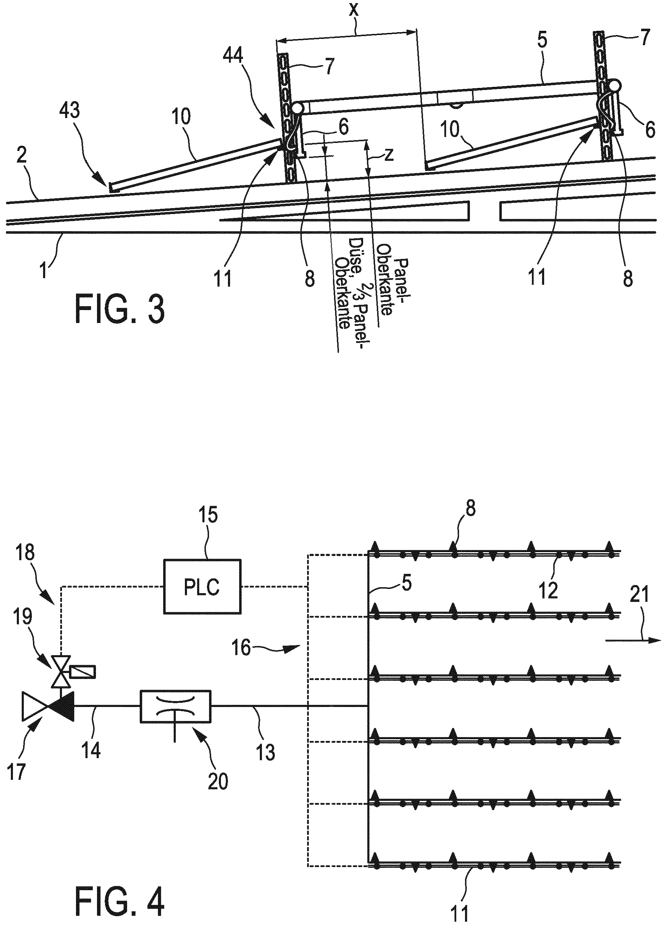

Fig. 3 zeigt schematisch und beispielhaft eine seitliche Ansicht der in den Figuren 1 und 2 gezeigten Komponenten. Wie in Fig. 3 gezeigt ist, sind die Solarpanels 10 bevorzugt schräg mittels der Stützstreben 7 auf der Platte 2 angeordnet, wobei das jeweilige Solarpanel 10 eine aufgrund der Schräglage obere Seite 44 und eine gegenüberliegende untere Seite 43 aufweist. Das Rohrsystem ist dabei so installiert, dass die Löschmittelauslässe 8 mit den Löschdüsen unterhalb der Solarpanels 10 so angeordnet sind, dass das Löschmittel in einen Bereich unterhalb des jeweiligen Solarpanels 10 ausbringbar ist. Die Löschdüsen spritzen demnach das Löschmittel in den Bereich unterhalb des jeweiligen Solarpanels 10. In diesem Beispiel ist der Abstand zwischen den Löschmittelauslässen 8 und der Platte 2 zwei Drittel des Abstandes zwischen der oberen Seite 44 des Solarpanels 10 und der Platte 2. Insbesondere ist der Abstand der Löschmittelauslässe 8 zu der Platte 2 zwei Drittel des Abstandes zwischen einer unteren Kante der oberen Seite 44 des Solarpanels 10 und der Platte 2. Wenn in einer anderen Ausführungsform die Solaranlage direkt auf dem Dach 1 installiert ist, ohne dass die Platte 2 verwendet wird, beträgt der Abstand zwischen den Löschmittelauslässen 8 und dem Dach 1 insbesondere zwei Drittel des Abstandes zwischen der oberen Seite 44 des Solarpanels 10, insbesondere der unteren Kante der oberen Seite 44 des Solarpanels 10, und dem Dach 1.

In dieser Ausführungsform beträgt der Abstand x zwischen gegenüberliegenden Solarpanels 10 benachbarter Reihen maximal 80 cm und der Abstand z zwischen der unteren Kante der oberen Seite 44 des jeweiligen Solarpanels 10 und der Platte 2 beträgt maximal 80 cm. Diese Abmessungen sind nur als beispielhaft zu betrachten. In anderen Ausführungsformen können diese Maximalwerte auch überschritten werden.

Das Brandlöschsystem umfasst auch eine Detektionseinrichtung 11, die ausgebildet ist, als Detektionsort einen Ort, an dem ein Brand aufgetreten ist oder wahrscheinlich auftreten wird, zu detektieren. Die Detektionseinrichtung 11 umfasst mehrere Detektoren 12 zum Detektieren des Detektionsortes, wobei die Detektionseinrichtung 11 mit den Detektoren 12 derart an dem jeweiligen Solarpanel 10 angebracht ist, dass die Detektionseinrichtung 11 mit den Detektoren 12 nach Anbringung auf dem Dach 1 unterhalb des jeweiligen Solarpanels 10 angeordnet ist. In dieser Ausführungsform ist die Detektionseinrichtung 11 mit den Detektoren 12 unterhalb der Solarpanels 10 im Bereich der jeweiligen oberen Seite 44 angeordnet. Durch diese Anordnung der Detektionseinrichtung 11 mit den Detektoren 12 unterhalb der Solarpanels 10 wird die Detektionseinrichtung vor zu starker Sonneneinstrahlung geschützt, wodurch die Lebensdauer der Detektoren erhöht und die Wahrscheinlichkeit einer durch die Sonneneinstrahlung verursachten fehlerhaften Branddetektion reduziert werden kann.

Die Figuren 1 bis 3 illustrieren, wie oben bereits erwähnt, nur einige Komponenten des gesamten Solaranlagensystems mit dem Brandlöschsystem und den Solarpanels. In dieser Ausführungsform umfasst das gesamte Solaranlagensystem tatsächlich sechs Reihen von Solarpanels 10, wobei das Brandlöschsystem zwei Löschbereiche mit jeweils sechs horizontalen Rohren 5, 105 aufweist, wobei einer dieser Löschbereiche beispielhaft und schematisch in Fig. 4 dargestellt ist. In den Figuren 1 bis 3 wurden nur wenige Komponenten zum Zwecke einer klareren Darstellung illustriert.

Das Brandlöschsystem umfasst demnach eine Löscheinrichtung mit zwei Gruppen von Löschmittelauslässen zum Ausbringen eines Löschmittels auf dem Dach 1, wobei eine erste Gruppe von Löschmittelauslässen 8 zusammen mit weiteren Elementen der Löscheinrichtung und des Brandlöschsystems in Fig. 4 gezeigt ist.

Das Brandlöschsystem umfasst eine Steuerung 15, die ausgebildet ist, die Löscheinrichtung in Abhängigkeit von dem Detektionsort zu steuern. Es ist ebenfalls in Fig. 4 schematisch dargestellt, dass die Detektoren 12 der Detektionseinrichtung 11 jeweils entlang gerader Linien angeordnet sind, die in die Führungsrichtung 21 verlaufen. Die Detektoren 12 der Detektionseinrichtung 11 verlaufen demnach parallel zu den horizontalen Rohren 5 und damit zu den Löschmittelauslässen 8. In dieser Ausführungsform ist die Detektionseinrichtung 11 mit den Detektoren 12 ein linienförmiger rücksetzbarer Wärmemelder. Die Detektoren 11 sind demnach bevorzugt Wärmedetektoren, wobei ein Brand oder ein wahrscheinliches Auftreten eines Brandes an einem Detektorort und damit der Detektionsort auf Basis einer Wärmemessung bestimmt werden können. Beispielsweise kann ein Detektionsort detektiert werden, wenn an diesem Ort die gemessene Wärme und/oder ein gemessener Wärmegradient einen vorbestimmten Grenzwert überschritten hat. Bevorzugt misst der jeweilige Detektor 12 die Wärme auf Basis einer Temperaturmessung, so dass ein Detektionsort detektiert werden kann, wenn an diesem Ort die gemessene Temperatur und/oder ein Temperaturgradient einen vorbestimmten Grenzwert überschreitet. Es können auch andere Detektortypen verwendet werden wie beispielsweise Rauchmelder.

In dieser Ausführungsform ist die Löscheinrichtung ausgebildet, Löschschaum als Löschmittel zu verwenden. Löschschaum hat unter anderem den Vorteil, dass er weniger oder nicht in das Dach 1 eindringt, wodurch Löschschäden vermindert werden können. In einer anderen Ausführungsform kann aber auch ein anderes Löschmittel verwendet werden wie beispielsweise Wasser. In dieser Ausführungsform wird als Löschschaum ein Schwerschaum mit der Verschäumungszahl 6 verwendet. Es können aber auch andere Schwer- und auch Mittelschäume verwendet werden. Es kann beispielsweise ein Schwerschaum mit einer anderen Verschäumungszahl zwischen einschließlich 4 und einschließlich 20 oder ein Mittelschaum mit einer Verschäumungszahl zwischen einschließlich 21 und einschließlich 200 verwendet werden. Schwer- und Mittelschäume sind im Vergleich zu einem Leichtschaum bevorzugt, weil diese weniger leicht durch Wind weggeweht werden können.

Die Löscheinrichtung des Brandlöschsystems umfasst ein Sprühwasserventil 17 mit einem Magnetventil 19 als Auslösemechanismus und einem Schaumerzeuger 20, der über ein Rohr 14 mit dem Sprühwasserventil 17 verbunden ist. Der Schaumerzeuger 20 ist wiederrum über ein Rohr 13 mit dem Rohr 5 verbunden. Die Steuerung 15 ist mittels einer Verkabelung 18 mit dem Auslösemechanismus 19 und mittels einer weiteren Verkabelung 16 mit dem linienförmigen Wärmemelder 11 verbunden, so dass die Steuerung 15 den Auslösemechanismus 19 in Abhängigkeit von einem detektierten Brand steuern kann.

Als Schaumerzeuger 20 kann beispielsweise ein unter dem Produktnamen "Viking Schaumerzeuger" bekannter Schaumerzeuger verwendet werden. Das Schaummittel kann beispielsweise ein synthetisches Tensidschaummittel oder ein Proteinschaummittel sein.

Es können aber auch andere Schaumerzeuger und/oder andere Schaummittel verwendet werden.

Die Löschmittelauslässe 8 können so ausgebildet sein, dass sie auch zur Schaumerzeugung beitragen. Der Löschschaum kann demnach in zwei Stufen erzeugt werden, wobei in einer ersten Stufe Löschschaum mittels des Schaumerzeugers 20 im Rohrsystem und in einer zweiten Stufe mittels Löschdüsen der Löschschaum weiter erzeugt wird. Die Löschdüsen können ohne Fremdenergie zur Schaumerzeugung beitragen. Bevorzugt wird in der ersten Stufe eine Mindestverschäumung erzeugt, die so bemessen ist, dass der Löschschaum allein aufgrund der Mindestverschäumung kaum durch das Dach 1 in ein Gebäude eindringen kann. Die Verschäumungsanforderung kann dann für die Löschdüsen relativ gering sein. Es ist aber auch möglich, dass der Löschschaum beispielsweise nur in einer Stufe durch den Schaumerzeuger 20 erzeugt wird.

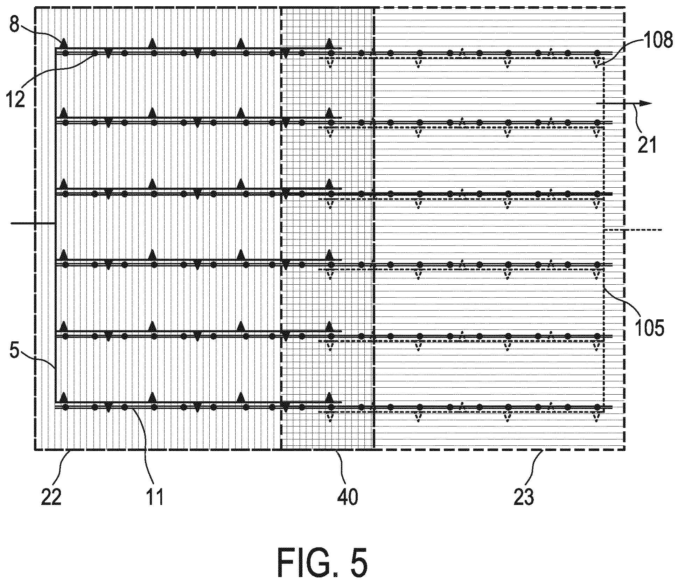

Fig. 4 zeigt, wie oben beschrieben, einen der zwei Löschbereiche der Löscheinrichtung des Brandlöschsystems. Die Kombination beider Löschbereiche ist schematisch und beispielhaft in Fig. 5 dargestellt.

Wie in dieser Figur gezeigt ist, umfasst die Löscheinrichtung zwei Gruppen von Löschmittelauslässen 8, 108 zum Ausbringen des Löschmittels auf dem Dach 1, wobei jede Gruppe von Löschmittelauslässen 8, 108 jeweils einem räumlichen Löschbereich 22, 23 zugeordnet ist. Die Löscheinrichtung ist so ausgebildet, dass das Löschmittel mittels Löschmittelauslässen 8 der ersten Gruppe ausbringbar ist unabhängig von einem Ausbringen des Löschmittels mittels der Löschmittelauslässe 108 der zweiten Gruppe, wobei die zwei Löschbereiche 22, 23 in einem Überlappungsbereich 40 überlappen.

Der zweite Löschbereich ist ähnlich ausgebildet wie der erste Löschbereich, der oben unter Bezugnahme auf die Figuren 1 bis 4 beschrieben worden ist. Insbesondere umfasst auch der zweite Löschbereich horizontale Rohre 105 und vertikale Rohre, die zu den Löschmittelauslässen 108 führen. Auch die Schaumerzeugung und die Steuerung für den zweiten Löschbereich kann wie oben unter Bezugnahme auf Fig. 4 beschrieben ausgebildet sein. Insbesondere sind die beiden Gruppen von Löschmittelauslässen 8, 108 getrennt voneinander adressierbar, so dass in den Löschbereichen 22, 23 unabhängig voneinander gelöscht werden kann. Es ist daher nicht notwendig, ein Löschmittel immer auf das gesamte Dach 1 auszubringen, wodurch ein Eindringen von Löschmittel in das Gebäude vermindert werden kann.

Die Löschbereiche 22, 23 können als Gruppenwirkflächen 22, 23 aufgefasst werden, wobei i) die erste Gruppenwirkfläche beziehungsweise der erste Löschbereich 22 durch die Löschmittelauslässe 8 und ii) die zweite Gruppenwirkfläche beziehungsweise der zweite Löschbereich 23 durch die Löschmittelauslässe 108 gebildet wird. Die Löscheinrichtung ist so ausgebildet, dass das Löschmittel durch Löschmittelauslässe einer selben Gruppe gleichzeitig ausgebracht wird. In dieser Ausführungsform erstrecken sich die Löschbereiche bzw. Gruppenwirkflächen 22, 23 jeweils über mindestens 50 m².

Wie oben beschrieben worden ist, ist dem ersten Löschbereich 22 ein Rohrsystem, das die horizontalen und vertikalen Rohre 5, 6 aufweist, zum Führen des Löschmittels zu den Löschmittelauslässen 8 zugeordnet, wobei, wie ebenfalls oben ausgeführt ist, dieses Rohrsystem des ersten Löschbereichs 22 so ausgebildet ist, dass die Löschmittelauslässe 8 entlang gerader Linien angeordnet sind, die in die Führungsrichtung 21 verlaufen. Der zweite Löschbereich 23 umfasst ein entsprechendes Rohrsystem mit horizontalen und vertikalen Rohren zum Führen des Löschmittels zu den jeweiligen Löschmittelauslässen 108, wobei das Rohrsystem des zweiten Löschbereichs 23 ebenfalls so ausgebildet ist, dass deren Löschmittelauslässe 108 entlang Linien angeordnet sind, die in die Führungsrichtung 21 verlaufen, wobei die Löschbereiche 22, 23 in dieser Führungsrichtung 21 überlappen und den Überlappungsbereich 40 bilden. In dieser Ausführungsform hat der Überlappungsbereich in der Führungsrichtung 21 bevorzugt eine Länge von mindestens 2 m und weiter bevorzugt von mindestens 3 m.

Die sich überlappende Löschbereiche 22, 23 sind in Führungsrichtung 21 nebeneinander angeordnet, wobei die Löschmittelauslässe 8, 108 unterschiedlicher Gruppen, die den sich überlappenden Löschbereichen 22, 23 zugeordnet sind, entlang von Linien angeordnet sind, die senkrecht zu der Führungsrichtung 21 zueinander versetzt sind. Ein erster Satz von Linien der ersten Gruppe von Löschmittelauslässen 8, die dem ersten Löschbereich 22 zugeordnet sind, und ein zweiter Satz von Linien der zweiten Gruppe von Löschmittelauslässen 108, die dem zweiten Löschbereich 23 zugeordnet sind, der mit dem ersten Löschbereich 22 überlappt, greifen ineinander. In dieser Ausführungsform sind von den Löschmittelauslässen 8 der ersten Gruppe diejenigen Löschmittelauslässe, die am weitesten in Richtung der zweiten Gruppe angeordnet sind, an derselben Position angeordnet, bezogen auf die Führungsrichtung 21, wie diejenigen Löschmittelauslässe der zweiten Gruppe von Löschmittelauslässen 108, die am weitesten in Richtung der ersten Gruppe angeordnet sind.

Die Steuerung 15 ist bevorzugt ausgebildet, nicht nur das Ausbringen des Löschmittels für den ersten Löschbereich 22 zu steuern, sondern auch das Ausbringen des Löschmittels für den zweiten Löschbereich 23. In einer anderen Ausführungsform können auch mehrere Steuerungen vorhanden sein, die die entsprechenden Steuerungen der Löschbereiche vornehmen.

Die Steuerung 15 ist ausgebildet, auf Basis von Signalen der Detektionseinrichtung 11 zu bestimmen, in welchem der Löschbereiche 22, 23 sich der Detektionsort befindet, und die Löscheinrichtung so zu steuern, dass das Löschmittel in dem bestimmten Löschbereich ausgebracht wird. Wenn sich der Detektionsort in dem Überlappungsbereich 40 befindet, in dem sich die Löschbereiche 22, 23 überlappen, so werden diese überlappenden Löschbereiche 22, 23 bestimmt und in diesen beiden Löschbereichen 22, 23 wird das Löschmittel ausgebracht. Es ist auch möglich, dass ein oder mehrere Detektionsorte in einem nichtüberlappenden Teil eines Löschbereichs bestimmt werden. In diesem Fall wird das Löschmittel nur in diesem Löschbereich ausgebracht.

Aufgrund der Anordnung der Reihen der Solarpanels in Führungsrichtung 21 werden auf dem Dach vorhandene Winde im Allgemeinen zumindest zum Teil entlang dieser Führungsrichtung 21 geführt. Aus diesem Grunde tritt eine Abweichung des Detektionsortes vom tatsächlichen Brandort insbesondere in dieser Führungsrichtung 21 auf. Um diesem Effekt entgegen zu wirken, erfolgt die Überlappung der Löschbereiche 22, 23 in der Führungsrichtung 21.

Die Löscheinrichtung ist so ausgebildet, dass das Löschmittel durch Löschmittelauslässe einer selben Gruppe gleichzeitig ausgebracht wird. Die Steuerung ist zudem bevorzugt ausgebildet, die Löscheinrichtung so zu steuern, dass das Löschmittel in beiden Löschbereichen 22, 23 gleichzeitig ausgebracht wird, wenn sich der Detektionsort in dem Überlappungsbereich 40 befindet.

Die Detektionseinrichtung 11 kann ausgebildet sein, einen Brand mittels Strahlungswärme und/oder mittels konvektiver Wärmeübertragung zu detektieren. Die Detektoren 12 der Detektionseinrichtung 11 sind an verschiedenen Detektionsorten angeordnet und jeweils einem Löschbereich 22, 23 und im Überlappungsbereich 40 den beiden Löschbereichen 22, 23 zugeordnet. In dieser Ausführungsform sind diese Zuordnungen der Steuerung 15 bekannt. Die Zuordnungen können beispielsweise in der Steuerung 15 oder in einem separaten Speicher, mit dem die Steuerung 15 verbunden ist, gespeichert sein. Aufgrund der Zuordnungen kann die Steuerung 15 sofort erkennen, in welchem der Löschbereiche 22, 23 ein Detektionsort detektiert worden ist und kann den oder die zur Löschung bestimmten Löschbereiche unmittelbar aktivieren.

In dieser Ausführungsform haben die Löschdüsen der Löschmittelauslässe 8, 108 einen horizontalen Abstrahlwinkel von 180°. Es können aber auch Löschdüsen verwendet werden, die einen kleineren oder einen größeren horizontalen Abstrahlwinkel aufweisen. Die Löschdüsen sind beispielsweise die Löschdüsen mit der Produktbezeichnung "Viking Model C-1 Window Sprinkler". Die Löschdüsen können auch sogenannte "aspirating sprinklers" sein. Zudem beträgt in dieser Ausführungsform, die unter Bezugnahme auf die Figuren 1 bis 5 beschrieben worden ist, der Abstand zwischen zwei benachbarten Löschmittelauslässen 8, 108 einer selben Löschgruppe 22, 23 maximal 160 cm. In einer anderen Ausführungsform kann dieser Abstand aber auch größer sein.

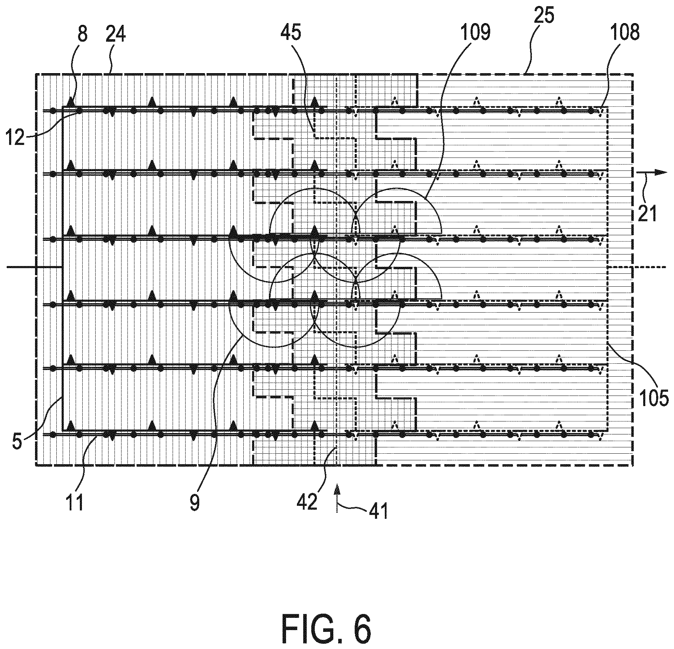

Die auf dem Dach zu erwartenden Winde können, wie oben erläutert, dazu führen, dass der Detektionsort, das heißt der Ort, an dem der Brand detektiert worden ist, nicht exakt mit dem realen Brandort übereinstimmt. Der im Vergleich zum tatsächlichen Brandort verschobene Detektionsort könnte dabei wiederum grundsätzlich dazu führen, dass zum Löschen ein Löschbereich aktiviert wird, der zwar den Detektionsort abdeckt, aber nicht den realen Brandort, wobei dieses Problem insbesondere in Grenzbereichen zwischen Löschbereichen auftritt. Um diesem Problem entgegenzutreten, überlappen sich in der unter Bezugnahme auf Fig. 4 beschriebenen Ausführungsform die Löschbereiche 22, 23 in dem Überlappungsbereich 40. Es ist allerdings auch möglich, diesem Problem zu begegnen, wenn sich die Löschbereiche nicht überlappen. Dies wird im Folgenden unter Bezugnahme auf Fig. 6 beschrieben.

Auch in dieser Ausführungsform umfasst das Brandlöschsystem für ein Dach mit einer Solaranlage eine Löscheinrichtung mit zwei Gruppen von Löschmittelauslässen 8, 108 zum Ausbringen eines Löschmittels auf dem Dach 1, wobei jede Gruppe von Löschmittelauslässen 8, 108 jeweils einem räumlichen Löschbereich 24, 25 zugeordnet ist. Die Löscheinrichtung ist so ausgebildet, dass Löschmittel mittels Löschmittelauslässen 8 einer Gruppe ausbringbar ist unabhängig von einem Ausbringen des Löschmittels mittels Löschmittelauslässen 108 einer anderen Gruppe. In dieser Ausführungsform überlappen die Löschbereiche 24, 25, die auch als Gruppenwirkflächen aufgefasst werden könnten, nicht. Des Weiteren gibt es auch in dieser Ausführungsform eine Detektionseinrichtung 11 mit Detektoren 12, die ausgebildet ist, als Detektionsort einen Ort zu detektieren, an dem ein Brand aufgetreten ist oder wahrscheinlich auftreten wird. Zudem umfasst auch in dieser Ausführungsform das Brandlöschsystem eine Steuerung 15, die ausgebildet ist, die Löscheinrichtungen in Abhängigkeit von dem Detektionsort zu steuern. In dieser Ausführungsform ist die Steuerung 15 aber so ausgebildet, dass, wenn sich der Detektionsort in einem vorab definierten Grenzbereich 41 befindet, der zwei aneinandergrenzende Teilbereiche unterschiedlicher Löschbereiche 24, 25 umfasst, dass Löschmittel in beiden Löschbereichen 24, 25, deren Teilbereiche von dem Grenzbereich 41 umfasst sind, ausgebracht wird. Mit anderen Worten, wenn sich der Detektionsort in dem ersten Löschbereich 24 und innerhalb des Grenzbereichs 41 befindet und wenn sich der reale Brandort in dem angrenzenden zweiten Löschbereich 25 befindet, werden dennoch beide Löschbereiche 24, 25 aktiviert, so dass die durch den Wind verursachte Verschiebung des Detektionsortes relativ zum tatsächlichen Brandort nicht zu einer alleinigen Auslösung des falschen, ersten Löschbereichs und damit zu keiner Löschung führt.

Abgesehen von der nicht vorhandenen Überlappung und der geänderten Steuerung, entspricht das hier unter Bezugnahme auf Fig. 6 beschriebene Brandlöschsystem dem Brandlöschsystem, das oben unter Bezugnahme auf Fig. 5 beschrieben worden ist. Insbesondere ist auch in dieser Ausführungsform jedem Löschbereich 24, 25 ein Rohrsystem 5, 105 zum Führen des Löschmittels zu den jeweiligen Löschmittelauslässen 8, 108 zugeordnet, wobei das Rohrsystem 5 des ersten Löschbereichs 24 so ausgebildet ist, dass die Löschmittelauslässe 8 entlang von Linien angeordnet sind, die in die Führungsrichtung 21 verlaufen, und wobei das Rohrsystem 105 des anderen Löschbereichs 25 ebenfalls so ausgebildet ist, dass die Löschmittelauslässe 108 entlang von Linien angeordnet sind, die ebenfalls in die Führungsrichtung 21 verlaufen. Der Grenzbereich 41 ist derart definiert, dass er eine Grenzlinie 42 zwischen den aneinandergrenzenden Löschbereichen 24, 25 abdeckt, die senkrecht zu der Führungsrichtung 21 verläuft.

Die Enden der Rohre 5, 105 unterschiedlicher aneinandergrenzender Löschbereiche 24, 25 stehen sich derart gegenüber, dass die jeweils nebeneinanderliegenden, abschließenden Löschdüsen 8, 108 unterschiedlicher Löschbereiche 24, 25 in unterschiedliche Richtungen zeigen. Da die nebeneinanderliegenden, abschließenden Löschdüsen 8, 108 unterschiedlicher aneinandergrenzender Löschbereiche 24, 25 in unterschiedliche Richtungen zeigen, wird im Grenzbereich 41 beispielsweise ein Bereich direkt oberhalb (top-down view) eines Rohrstranges von einer Löschdüse 8 aus dem ersten Löschbereich 24 versorgt, direkt unterhalb jedoch von der Löschdüse 108 aus dem angrenzenden zweiten Löschbereich 25. Dies wird in Fig. 6 durch die Abdeckungsbereiche 9, 109 der Löschdüsen 8, 108 und die gedachte Löschlinie 45 illustriert. Aus diesem Grunde sind die in Fig. 6 vertikal angeordneten Seiten des Grenzbereichs 41, das heißt, die Seiten des Grenzbereichs 41, die senkrecht zu den Rohren 5, 105 verlaufen, als Rechteckkurve ausgebildet.

Obwohl in den beschriebenen Ausführungsformen die Löschdüsen einen horizontalen Abstrahlwinkel von 180° aufweisen, kann der Abstrahlwinkel auch größer oder kleiner sein.

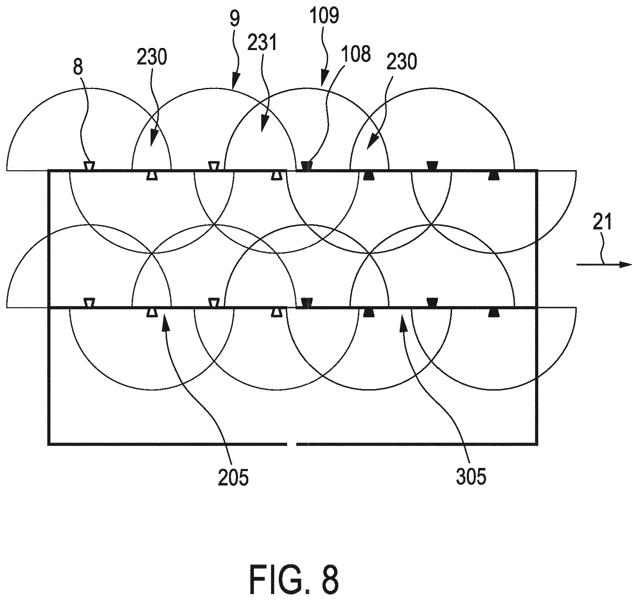

Fig. 8 zeigt schematisch und beispielhaft ein weiteres Brandlöschsystem für ein Dach mit einer Solaranlage. Das Brandlöschsystem umfasst eine Löscheinrichtung mit einer Gruppe von Löschmittelauslässen 8 zum Ausbringen eines Löschmittels auf dem Dach, wobei die Löschmittelauslässe 8 Löschdüsen umfassen, die wechselweise in entgegengesetzte Richtungen weisend in jeweils einen Abdeckungsbereich 9 Löschmittel ausbringen. Der Ausdruck "wechselweise in entgegengesetzte Richtungen" bedeutet, dass in Führungsrichtung 21 benachbarte Löschdüsen 8 in entgegengesetzte Richtungen weisen, wobei sich die entgegengesetzten Richtungen auf Richtungen der Löschdüsen 8 in einer horizontalen Ebene beziehen. Die Richtungen benachbarter Löschdüsen projiziert in eine gedachte horizontale Ebene weisen demnach in entgegengesetzte Richtungen. Anders ausgedrückt, von oben betrachtet weisen die Richtungen benachbarter Löschdüsen 8 in entgegengesetzte Richtungen.

Der Abstrahlwinkel dieser Löschdüsen 8 ist kleiner 360° und in dieser Ausführungsform gleich 180°. Zudem ist der Abdeckungsbereich 9 einer jeweiligen Löschdüse 8 in dieser Ausführungsform im Wesentlichen halbkreisförmig, wobei sich auch dies auf eine Projektion des Abdeckungsbereichs in eine horizontale Ebene bezieht. In anderen Ausführungsformen kann der Abdeckungsbereich auch eine andere Form aufweisen.

Die Löschmittelauslässe 8 sind an einem Rohrsystem 205 angeordnet, über das den Löschmittelauslässen 8 Löschmittel zugeführt wird, wobei die Löschmittelauslässe 8 an parallelen Rohren des Rohrsystems 205 angeordnet sind, die in Führungsrichtung 21 weisen. Die Löschmittelversorgung kann beispielsweise so erfolgen, wie sie oben unter Bezugnahme auf Fig. 4 beschrieben worden ist.

In dieser Ausführungsform umfasst die Löscheinrichtung eine weitere Gruppe von Löschmittelauslässen 108 zum Ausbringen des Löschmittels auf dem Dach, wobei die Löschmittelauslässe 108 ebenfalls Löschdüsen umfassen, die wechselweise in entgegengesetzte Richtungen weisend in jeweils einem Abdeckungsbereich 109 Löschmittel ausbringen und einen horizontalen Abstrahlwinkel kleiner als 360° aufweisen, der auch für diese Löschdüsen 108 in diesem Beispiel 180° beträgt. Diese zweite Gruppe von Löschmittelauslässen 108 wird mittels eines Rohrsystems 305 mit dem Löschmittel versorgt. Auch die Versorgung des zweiten Rohrsystems 305 mit dem Löschmittel kann beispielsweise wie oben unter Bezugnahme auf Fig. 4 beschrieben erfolgen. In diesem Ausführungsbeispiel sind die Rohrsysteme 205, 305 vollständig getrennt, so dass vollständig unabhängig voneinander die erste Gruppe von Löschdüsen 8 und die zweite Gruppe von Löschdüsen 108 mit Löschmittel versorgt werden können.

In dieser Ausführungsform ist die Löscheinrichtung so ausgebildet, dass ein Überlappungsbereich 230 von Abdeckungsbereichen 9 zweier benachbarter Löschmittelauslässe 8 einer selben Gruppe kleiner ist als ein Überlappungsbereich 231 von Abdeckungsbereichen 9, 109 benachbarter Löschmittelauslässe unterschiedlicher Gruppen. Insbesondere ist in dieser Ausführungsform der Abdeckungsbereich benachbarter Löschmittelauslässe unterschiedlicher Gruppen mehr als doppelt so groß wie der Überlappungsbereich 230 von Abdeckungsbereichen 9 zweier benachbarter Löschmittelauslässe 8 einer selben Gruppe. Die Abmessungen und Größen beziehen sich hier bevorzugt auf eine Projektion der Überlappungsbereiche und Abdeckungsbereiche in eine gedachte horizontale Ebene. Es wird hier also eine Betrachtungsweise "von oben" angenommen.

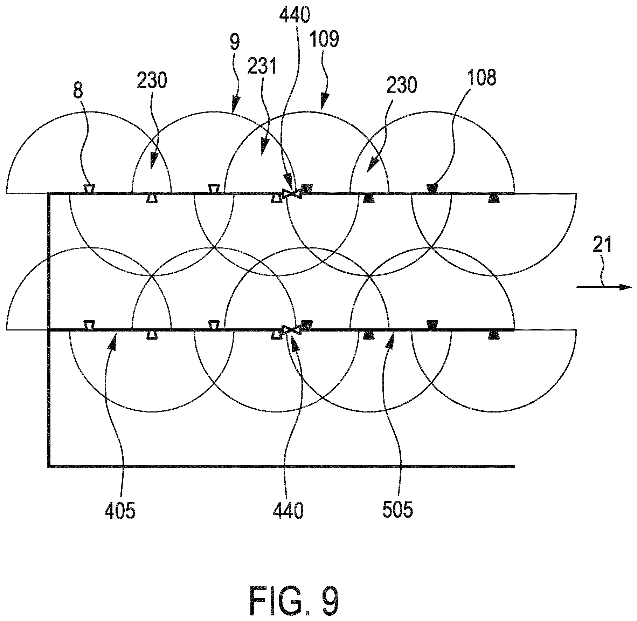

Eine weitere Ausführungsform eines Brandlöschsystems für ein Dach mit einer Solaranlage ist beispielhaft und schematisch in Fig. 9 gezeigt. In dieser Ausführungsform umfasst das Brandlöschsystem auch eine Löscheinrichtung mit einer ersten Gruppe von Löschmittelauslässen 8 zum Ausbringen eines Löschmittels auf dem Dach und eine zweite von Gruppe von Löschmittelauslässen 108 zum Ausbringen des Löschmittels auf dem Dach, wobei die erste Gruppe von Löschmittelauslässen 8 und die zweite Gruppe von Löschmittelauslässen 108 unterschiedlichen Löschbereichen zugeordnet sind. Die Löschmittelauslässe 8, 108 umfassen Löschdüsen, die wechselweise in entgegengesetzte Richtungen weisend in jeweils einen Abdeckungsbereich 9, 109 Löschmittel ausbringen und einen horizontalen Abstrahlwinkel kleiner als 360° aufweisen. In dieser Ausführungsform beträgt der horizontale Abstrahlwinkel 180°. Die Abdeckungsbereiche 9, 109 benachbarter Löschdüsen 8, 108 einer selben Gruppe überlappen sich in einem jeweiligen Überlappungsbereich 230. Ähnlich wie in der in Fig. 8 gezeigten Ausführungsform, ist auch in dieser Ausführungsform ein Überlappungsbereich 230 von Abdeckungsbereichen 9 zweier benachbarter Löschmittelauslässe 8 einer selben Gruppe kleiner als ein Überlappungsbereich 231 von Abdeckungsbereichen benachbarter Löschmittelauslässe 8, 108 unterschiedlicher Gruppen.

Die Ausführungsform gemäß Fig. 9 unterscheidet sich allerdings von der Ausführungsform gemäß Fig. 8 darin, dass die zweite Gruppe von Löschmittelauslässen 108 das Löschmittel nicht unabhängig von einem Ausbringen des Löschmittels über die Löschmittelauslässe 8 der ersten Gruppe ausbringen kann. Insbesondere ist in dieser Ausführungsform das Löschmittel a) mittels der Löschmittelauslässe 8 der ersten Gruppe ausbringbar unabhängig von einem Ausbringen des Löschmittels mittels der Löschmittelauslässe 108 der zweiten Gruppe und b) mittels der Löschmittelauslässe 108 der zweiten Gruppe ausbringbar abhängig von einem Ausbringen des Löschmittels mittels der Löschmittelauslässe 8 der ersten Gruppe. Um dies zu realisieren, umfasst die Löscheinrichtung ein Rohrsystem mit einem ersten Abschnitt 405 und einem zweiten Abschnitt 505, wobei der erste Abschnitt 405 und der zweite Abschnitt 505 über Ventile 440 miteinander verbunden sind.

Die Löscheinrichtung ist so ausgebildet, dass das Löschmittel dem ersten Abschnitt 405 des Rohrsystems zugeführt wird und der zweite Abschnitt 505 des Rohrsystems ebenfalls mit Löschmittel versorgt wird, wenn die Ventile 440 geöffnet sind. Bei geöffneten Ventilen 440 erfolgt die Versorgung der Löschmittelauslässe 108 der zweiten Gruppe demnach über den ersten Abschnitt 405 des Rohrsystems. Der zweite Abschnitt 505 des Rohrsystems verfügt nicht über eine direkte Verbindung zu einer Löschmittelversorgung. Auch in dieser Ausführungsform kann die Löschmittelversorgung beispielsweise wie oben unter Bezugnahme auf Fig. 4 beschrieben erfolgen.

Obwohl es aus Klarheitsgründen nicht dargestellt ist, umfassen auch die Brandlöschsysteme gemäß den Figuren 8 und 9 Detektionseinrichtungen, die ausgebildet sind, als Detektionsort einen Ort zu detektieren, an dem ein Brand aufgetreten ist oder wahrscheinlich auftreten wird. Die Detektionseinrichtung entspricht bevorzugt derjenigen, die oben unter Bezugnahme auf Fig. 4 beschrieben worden ist. Die Detektionseinrichtung 11 kann daher mehrere Detektoren 12 zum Detektieren des Ortes aufweisen, an dem ein Brand aufgetreten ist oder wahrscheinlich auftreten wird, wobei die Detektoren 12 entlang gerader Linien angeordnet sind, die in Führungsrichtung 21 orientiert sind.

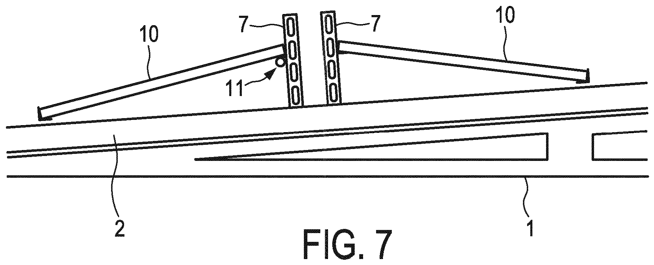

Obwohl in den oben beschriebenen Ausführungsformen die Löscheinrichtung und die Solarpanels auf eine bestimmte Art angeordnet sind, können in anderen Ausführungsformen die Löscheinrichtung und/oder diese Solarpanels auch anders angeordnet sein. Beispielsweise können gegenüberliegende Solarpanels auf dem Dach so schräg angeordnet werden, dass die jeweilige höhere Seite des jeweiligen Solarpanels 10 dem gegenüberliegenden Solarpanel zugewandt ist, wie es in Fig. 7 schematisch dargestellt ist. Auch in dieser Ausführungsform umfasst das Solaranlagensystem ein Brandlöschsystem mit Löschmittelauslässen, die bevorzugt so ausgebildet sind, dass das Löschmittel in die Bereiche unterhalb der Solarpanels 10 ausbringbar ist. Die entsprechenden Rohre und Löschmittelauslässe sind in Fig. 7 nur aus Klarheitsgründen nicht gezeigt, da hier nur eine alternative Anordnung der Solarpanels illustriert werden soll.

Obwohl in den oben mit Verweis auf die Figuren 1, 3 und 7 beschriebenen Ausführungsformen die Solarpanels mittels einer Platte auf dem Dach angeordnet sind, können die Solarpanels natürlich auch auf eine andere Art und Weise auf dem Dach angeordnet sein. Zum Beispiel können die Solarpanels mittels eines Schienensystems auf dem Dach befestigt sein. Es ist auch möglich, dass die Solarpanels direkt auf dem Dach befestigt sind, das heißt insbesondere ohne eine zwischen den Solarpanels und dem Dach angeordnete Platte.

Die oben beschriebenen Steuerungen sind ausgebildet, die entsprechenden Steuerungsverfahren durchzuführen. Hierzu können die Steuerungsverfahren als Programcode eines Computerprograms und/oder als entsprechende Hardware implementiert sein. Die Steuerungen umfassen insbesondere speicherprogrammierbare Steuerungen.

In den Ansprüchen schließen die Wörter "aufweisen" und "umfassen" nicht andere Elemente oder Schritte aus und der unbestimmte Artikel "ein" schließt eine Mehrzahl nicht aus.

Eine einzelne Einheit oder Vorrichtung kann die Funktionen mehrerer Elemente durchführen, die in den Ansprüchen aufgeführt sind. Die Tatsache, dass einzelne Funktionen und Elemente in unterschiedlichen abhängigen Ansprüchen aufgeführt sind, bedeutet nicht, dass nicht auch eine Kombination dieser Funktionen oder Elemente vorteilhaft verwendet werden könnte.

Ein Computerprogramm kann auf einem geeigneten Medium gespeichert und/oder verteilt werden, wie beispielsweise einem optischen Speichermedium oder einem Festkörperspeichermedium, das zusammen mit oder als Teil anderer Hardware vertrieben wird. Das Computerprogramm kann aber auch in anderen Formen vertrieben werden, beispielsweise über das Internet oder andere Telekommunikationssysteme.

Die Bezugszeichen in den Ansprüchen sind nicht derart zu verstehen, dass der Gegenstand und der Schutzbereich der Ansprüche durch diese Bezugszeichen eingeschränkt ist.

### Bezugszeichenliste

- 1: Dach
- 2: Platte
- 3: erste Reihe von Solarpanels
- 4: zweite Reihe von Solarpanels
- 5, 105, 205, ..., 505: horizontal verlaufende Rohre zum Zuführen des Löschmittels
- 6: vertikal verlaufende Rohre zum Zuführen des Löschmittels zu den Löschdüsen
- 7: Stützstreben für Solarpanels und Rohre
- 8, 108: Löschdüse, Löschmittelauslass
- 9, 109: Abdeckungsbereich einer Löschdüse
- 10: Solarpanel
- 11: linienförmiger Wärmemelder
- 12: Detektor
- 13: Rohr von Schaumerzeuger zu Rohr 5
- 14: Rohr von Sprühwasserventil zu Schaumerzeuger
- 15: Steuerung
- 16: Verkabelung zwischen Wärmemelder und Steuerung
- 17: Sprühwasserventil
- 18: Verkabelung zwischen Sprühwasserventil und Steuerung
- 19: Auslösemechanismus, Magnetventil
- 20: Schaumerzeuger
- 21: Führungsrichtung
- 22...25: Gruppenwirkfläche, Löschbereich
- 40: Überlappungsbereich von Löschbereichen
- 41: Grenzbereich
- 42: Grenzlinie
- 43: untere Seite eines installierten Solarpanels
- 44: obere Seite eines installierten Solarpanels
- 45: Löschlinie
- 230, 231: Überlappungsbereich von Abdeckungsbereichen
- 440: Ventile

## Patentansprüche

1. Brandlöschsystem für ein Dach mit einer Solaranlage, deren Solarpanels in Reihen auf dem Dach anzuordnen sind, wobei die Solarpanel-Reihen in eine Führungsrichtung (21) auszurichten sind, wobei das Brandlöschsystem aufweist:
- eine Löscheinrichtung mit mehreren Gruppen von Löschmittelauslässen (8, 108) zum Ausbringen eines Löschmittels auf dem Dach (1), wobei jede Gruppe von Löschmittelauslässen (8, 108) jeweils einem räumlichen Löschbereich (22, 23) zugeordnet ist, wobei die Löscheinrichtung so ausgebildet ist, dass Löschmittel mittels Löschmittelauslässen (8) einer Gruppe ausbringbar ist unabhängig von einem Ausbringen des Löschmittels mittels Löschmittelauslässen (108) einer anderen Gruppe, und
- eine Detektionseinrichtung (11), die ausgebildet ist, als Detektionsort einen Ort, an dem ein Brand aufgetreten ist oder wahrscheinlich auftreten wird, zu detektieren,
**dadurch gekennzeichnet, dass** jedem Löschbereich (22, 23) ein Rohrsystem (5, 105) zum Führen des Löschmittels zu den jeweiligen Löschmittelauslässen (8, 108) zugeordnet ist, wobei das Rohrsystem (5) eines Löschbereichs (22) so ausgebildet ist, dass die Löschmittelauslässe (8) entlang von senkrecht zu der Führungsrichtung (21) zueinander versetzten Rohren angeordnet sind, die in die Führungsrichtung (21) verlaufen, wobei das Rohrsystem (105) eines anderen Löschbereichs (23) ebenfalls so ausgebildet ist, dass Löschmittelauslässe (108) entlang von senkrecht zu der Führungsrichtung (21) zueinander versetzten Rohren angeordnet sind, die in die Führungsrichtung (21) verlaufen, wobei zumindest zwei Löschbereiche (22, 23) in Führungsrichtung (21) überlappen,
und dadurch, dass die Löschmittelauslässe (8, 108) Löschdüsen umfassen, die wechselweise in entgegengesetzte Richtungen weisen, sodass entlang eines jeweiligen Rohres mehrere Löschmittelauslassstellen vorhanden sind, wobei an einer selben der mehreren Löschmittelauslassstellen eine einzige Löschdüse so angeordnet ist, dass sie, bezogen auf eine Projektion in eine horizontale Ebene, in eine bestimmte Richtung weist, wobei die Löschdüsen einen horizontalen Abstrahlwinkel kleiner als 360° aufweisen.

2. Brandlöschsystem nach Anspruch 1, **dadurch gekennzeichnet, dass** das Brandlöschsystem eine Steuerung (15) aufweist, die ausgebildet ist, die Löscheinrichtung in Abhängigkeit von dem Detektionsort zu steuern, wobei die Steuerung (15) vorzugsweise ausgebildet ist, zu bestimmen, in welchem Löschbereich (22, 23) sich der Detektionsort befindet und die Löscheinrichtung so zu steuern, dass das Löschmittel in dem bestimmten Löschbereich (22, 23) ausgebracht wird.

3. Brandlöschsystem für ein Dach mit einer Solaranlage, deren Solarpanels in Reihen auf dem Dach anzuordnen sind, wobei die Solarpanel-Reihen in eine Führungsrichtung (21) auszurichten sind, wobei das Brandlöschsystem aufweist:
- eine Löscheinrichtung mit einer Gruppe von Löschmittelauslässen (8) zum Ausbringen eines Löschmittels auf dem Dach (1) , wobei die Gruppe von Löschmittelauslässen (8) einem räumlichen Löschbereich zugeordnet ist, wobei dem Löschbereich ein Rohrsystem (5) zum Führen des Löschmittels zu den jeweiligen Löschmittelauslässen (8) zugeordnet ist, wobei das Rohrsystem (5) des Löschbereichs so ausgebildet ist, dass die Löschmittelauslässe (8) entlang von senkrecht zu der Führungsrichtung (21) zueinander versetzten Linien angeordnet sind, die in die Führungsrichtung (21) verlaufen, und
- eine Detektionseinrichtung (11), die ausgebildet ist, als Detektionsort einen Ort, an dem ein Brand aufgetreten ist oder wahrscheinlich auftreten wird, zu detektieren,
**dadurch gekennzeichnet, dass** die Löschmittelauslässe (8) Löschdüsen umfassen, die wechselweise in entgegengesetzte Richtungen weisend in jeweils einen Abdeckungsbereich (9) Löschmittel ausbringen, sodass entlang eines jeweiligen Rohres mehrere Löschmittelauslassstellen (8) vorhanden sind, wobei an einer selben der mehreren Löschmittelauslassstellen (8) eine einzige Löschdüse so angeordnet ist, dass sie, bezogen auf eine Projektion in eine horizontale Ebene, in eine bestimmte Richtung weist, wobei die Löschdüsen einen horizontalen Abstrahlwinkel kleiner oder gleich 270° aufweisen, wobei Abdeckungsbereiche (9) benachbarter Löschdüsen der Gruppe überlappen.

4. Brandlöschsystem nach einem der vorhergehenden Ansprüche, **dadurch gekennzeichnet, dass** die Detektionseinrichtung (11) mehrere Detektoren (12) zum Detektieren des Ortes aufweist, an dem ein Brand aufgetreten ist oder wahrscheinlich auftreten wird, wobei die Detektoren (12) entlang gerader Linien angeordnet sind, und vorzugsweise **dadurch gekennzeichnet, dass** die Detektoren (12) entlang gerader Linien angeordnet sind, die in Führungsrichtung (21) verlaufen.

5. Brandlöschsystem nach einem der vorhergehenden Ansprüche, **dadurch gekennzeichnet, dass** die Löscheinrichtung ausgebildet ist, Löschschaum als Löschmittel zu verwenden, wobei die Löscheinrichtung ein Rohrsystem, ein Wasserventil (17) und einen Schaumerzeuger (20) zum Erzeugen von Löschschaum aufweist, wobei das Rohrsystem ausgebildet ist, Wasser von dem Wasserventil (17) zu dem Schaumerzeuger (20) und Löschschaum von dem Schaumerzeuger (20) zu den Löschmittelauslässen zu führen, vorzugsweise ferner **dadurch gekennzeichnet, dass** die Löschmittelauslässe so ausgebildet sind, dass sie auch zur Schaumerzeugung beitragen.

6. Brandlöschsystem nach einem der vorhergehenden Ansprüche, soweit rückbezogen auf Anspruch 1, **dadurch gekennzeichnet, dass** i) die Löscheinrichtung so ausgebildet ist, dass a) das Löschmittel mittels Löschmittelauslässen (8) einer Gruppe ausbringbar ist unabhängig von einem Ausbringen des Löschmittels mittels Löschmittelauslässen (108) einer anderen Gruppe und b) das Löschmittel mittels Löschmittelauslässen (108) der anderen Gruppe ausbringbar ist abhängig von einem Ausbringen des Löschmittels mittels Löschmittelauslässen (8) der einen Gruppe, oder dass ii) die Löscheinrichtung so ausgebildet ist, dass a) das Löschmittel mittels Löschmittelauslässen (8) einer Gruppe ausbringbar ist unabhängig von einem Ausbringen des Löschmittels mittels Löschmittelauslässen (108) einer anderen Gruppe und b) das Löschmittel mittels Löschmittelauslässen (108) der anderen Gruppe ausbringbar ist unabhängig von einem Ausbringen des Löschmittels mittels Löschmittelauslässen (8) der einen Gruppe.

7. Solaranlagensystem für ein Dach (1), wobei das Solaranlagensystem umfasst:
- ein Brandlöschsystem nach einem der Ansprüche 1 bis 6,
- mindestens ein Solarpanel (10).

8. Solaranlagensystem nach Anspruch 7, **dadurch gekennzeichnet, dass** die Detektionseinrichtung (11) mehrere Detektoren (12) zum Detektieren des Detektionsortes aufweist, wobei die Detektoren (12) derart an dem Solarpanel (10) angebracht sind, dass die Detektoren (12) nach Anbringung auf dem Dach (1) unterhalb des Solarpanels (10) angeordnet sind.

9. Solaranlagensystem nach Anspruch 8, **dadurch gekennzeichnet, dass** das Solarpanel (10) derart schräg auf dem Dach (1) angeordnet ist, dass es eine obere Seite (44) und eine gegenüber liegenden untere Seite (43) aufweist, wobei die Detektoren (12) unterhalb des Solarpanels (10) im Bereich der oberen Seite (44) angeordnet sind.

10. Solaranlagensystem nach einem der Ansprüche 7 bis 9, **dadurch gekennzeichnet, dass** die Löscheinrichtung so ausgebildet ist, dass, nach Anbringung des Solaranlagensystems auf dem Dach (1), die Löschmittelauslässe (8) unterhalb des Solarpanels (10) so angeordnet sind, dass das Löschmittel in einen Bereich unterhalb des Solarpanels (10) ausbringbar ist.

11. Solaranlagensystem nach einem der Ansprüche 7 bis 10, **dadurch gekennzeichnet, dass** das Solaranlagensystem mehrere Solarpanels (10) aufweist, die nebeneinander in Führungsrichtung (21) angeordnet sind.

## Claims

1. Fire extinguishing system for a roof with a solar installation, the solar panels of which are to be arranged in rows on the roof, wherein the rows of solar panels are to be aligned in a guiding direction (21), wherein the fire extinguishing system comprises:
- an extinguishing apparatus with a plurality of groups of extinguishing agent outlets (8, 108) for discharging an extinguishing agent on the roof (1), each group of extinguishing agent outlets (8, 108) being assigned to a respective spatial extinguishing area (22, 23), wherein the extinguishing apparatus is configured such that extinguishing agent is dischargeable by means of extinguishing agent outlets (8) of a group independently of a discharging of extinguishing agent by means of extinguishing agent outlets (108) of another group, and
- a detection apparatus (11) configured to detect as a detection location a location where a fire has occurred or is likely to occur,
**characterized in that** each extinguishing area (22, 23) is assigned a pipe system (5, 105) for guiding the extinguishing agent to the respective extinguishing agent outlets (8, 108), wherein the pipe system (5) of an extinguishing area (22) is configured such that the extinguishing agent outlets (8) are arranged along pipes being offset from each other perpendicular to the guiding direction (21), which extend in the guiding direction (21), wherein the pipe system (105) of another extinguishing zone (23) is also configured such that extinguishing agent outlets (108) are arranged along pipes offset from each other perpendicular to the guiding direction (21), which extend in the guiding direction (21), wherein at least two extinguishing areas (22, 23) overlap in the guiding direction (21),
and **in that** the extinguishing agent outlets (8, 108) comprise extinguishing nozzles that point alternately in opposite directions, so that a plurality of extinguishing agent outlet positions are present along a respective pipe, wherein a single extinguishing nozzle is arranged at one and the same of the plurality of extinguishing agent outlet positions in such a way that, in relation to a projection in a horizontal plane, it points in a specific direction, wherein the extinguishing nozzles have a horizontal discharge angle of less than 360°.

2. Fire extinguishing system according to claim 1, **characterized in that** the fire extinguishing system comprises a controller (15) which is configured to control the extinguishing apparatus in dependence on the detection location, wherein the controller (15) is preferably configured to determine in which extinguishing area (22, 23) the detection location is located and to control the extinguishing apparatus in such a way that the extinguishing agent is discharged in the determined extinguishing area (22, 23).

3. Fire extinguishing system for a roof with a solar installation, the solar panels of which are to be arranged in rows on the roof, wherein the rows of solar panels are to be aligned in a guiding direction (21), wherein the fire extinguishing system comprises:
- an extinguishing apparatus with a group of extinguishing agent outlets (8) for discharging an extinguishing agent onto the roof (1), wherein the group of extinguishing agent outlets (8) is assigned to a spatial extinguishing area, wherein the extinguishing area is assigned a pipe system (5) for guiding the extinguishing agent to the respective extinguishing agent outlets (8), wherein the pipe system (5) of the extinguishing area is configured such that the extinguishing agent outlets (8) are arranged along lines offset from each other perpendicular to the guiding direction (21) and running in the guiding direction (21), and
- a detection apparatus (11) which is configured to detect as a detection location a location where a fire has occurred or is likely to occur,
**characterized in that** the extinguishing agent outlets (8) comprise extinguishing nozzles which, pointing alternately in opposite directions, discharge extinguishing agent into a respective coverage region (9), so that a plurality of extinguishing agent outlet positions (8) are present along a respective pipe, wherein a single extinguishing nozzle is arranged at one and the same of the plurality of extinguishing agent outlet positions (8) such that, in relation to a projection in a horizontal plane, it points in a specific direction, wherein the extinguishing nozzles have a horizontal discharge angle of less than or equal to 270°, wherein coverage regions (9) of neighboring extinguishing nozzles of the group overlap.

4. Fire extinguishing system according to any of the preceding claims, **characterized in that** the detection apparatus (11) comprises several detectors (12) for detecting the location where a fire has occurred or is likely to occur, wherein the detectors (12) are arranged along straight lines, and preferably **characterized in that** the detectors (12) are arranged along straight lines that extend in the guiding direction (21).

5. Fire extinguishing system according to any of the preceding claims, **characterized in that** the extinguishing apparatus is configured to use extinguishing foam as an extinguishing agent, wherein the extinguishing apparatus comprises a pipe system, a water valve (17), and a foam generator (20) for generating extinguishing foam, wherein the pipe system is configured to guide water from the water valve (17) to the foam generator (20) and extinguishing foam from the foam generator (20) to the extinguishing agent outlets, preferably further **characterized in that** the extinguishing agent outlets are configured to also contribute to the generating of foam.

6. Fire extinguishing system according to any of the preceding claims, insofar as it refers back to claim 1, **characterized in that** i) the extinguishing apparatus is configured such that a) the extinguishing agent is dischargeable by means of extinguishing agent outlets (8) of one group independently of a discharging of the extinguishing agent by means of extinguishing agent outlets (108) of another group, and b) the extinguishing agent is dischargeable by means of extinguishing agent outlets (108) of the other group in dependence on a discharging of the extinguishing agent by means of extinguishing agent outlets (8) of the one group, or that ii) the extinguishing apparatus is configured such that a) the extinguishing agent is dischargeable by means of extinguishing agent outlets (8) of one group independently of a discharging of the extinguishing agent by means of extinguishing agent outlets (108) of another group, and b) the extinguishing agent is dischargeable by means of extinguishing agent outlets (108) of the other group independently of a discharging of the extinguishing agent by means of extinguishing agent outlets (8) of the one group.

7. Solar installation system for a roof (1), wherein the solar installation system comprises:
- a fire extinguishing system according to any of claims 1 to 6,
- at least one solar panel (10).

8. Solar installation system according to claim 7, **characterized in that** the detection apparatus (11) comprises a plurality of detectors (12) for detecting the detection location, wherein the detectors (12) are installed on the solar panel (10) in such a manner that, after installation on the roof (1), the detectors (12) are arranged below the solar panel (10).

9. Solar installation system according to claim 8, **characterized in that** the solar panel (10) is arranged inclined in such a manner on the roof (1) that it comprises an upper side (44) and an opposite lower side (43), wherein the detectors (12) are arranged below the solar panel (10) in the area of the upper side (44).

10. Solar installation system according to any of claims 7 to 9, **characterized in that** the extinguishing apparatus is configured such that, after the solar installation system has been installed on the roof (1), the extinguishing agent outlets (8) are arranged below the solar panel (10) in such a way that the extinguishing agent is dischargeable into a region below the solar panel (10).

11. Solar installation system according to any of claims 7 to 10, **characterized in that** the solar installation system comprises a plurality of solar panels (10) which are arranged next to each other in the guiding direction (21).

## Revendications

1. Système d'extinction d'incendie pour un toit avec une installation solaire dont les panneaux solaires sont à disposer en rangées sur le toit, dans lequel les rangées de panneaux solaires sont à orienter dans une direction de guidage (21), dans lequel le système d'extinction d'incendie présente :
- un dispositif d'extinction avec plusieurs groupes de sorties d'agent extincteur (8, 108) pour distribuer un agent extincteur sur le toit (1), dans lequel chaque groupe de sorties d'agent extincteur (8, 108) est respectivement associé à une zone d'extinction spatiale (22, 23), dans lequel le dispositif d'extinction est réalisé de telle sorte que l'agent extincteur peut être distribué au moyen de sorties d'agent extincteur (8) d'un groupe indépendamment d'une distribution de l'agent extincteur au moyen de sorties d'agent extincteur (108) d'un autre groupe, et
- un dispositif de détection (11), qui est réalisé pour détecter, en tant que lieu de détection, un lieu où un incendie s'est produit ou est susceptible de se produire,
**caractérisé en ce qu'**est associé à chaque zone d'extinction (22, 23) un système de tuyaux (5, 105) pour guider l'agent extincteur vers les sorties d'agent extincteur (8, 108) respectives, dans lequel le système de tuyaux (5) d'une zone d'extinction (22) est réalisé de telle sorte que les sorties d'agent extincteur (8) sont disposées le long de tuyaux décalés les uns par rapport aux autres, perpendiculairement à la direction de guidage (21), qui s'étendent dans la direction de guidage (21), dans lequel le système de tuyaux (105) d'une autre zone d'extinction (23) est également réalisé de telle sorte que des sorties d'agent extincteur (108) sont disposées le long de tuyaux décalés les uns par rapport aux autres, perpendiculairement à la direction de guidage (21), qui s'étendent dans la direction de guidage (21), dans lequel au moins deux zones d'extinction (22, 23) se chevauchent dans la direction de guidage (21),
et **en ce que** les sorties d'agent extincteur (8, 108) comprennent des buses d'extinction qui pointent alternativement dans des directions opposées, si bien qu'il existe plusieurs points de sortie d'agent extincteur le long d'un tuyau respectif, dans lequel une seule buse d'extinction est disposée sur un des plusieurs points de sortie d'agent extincteur de telle sorte qu'elle pointe, par rapport à une projection dans un plan horizontal, dans une direction déterminée, dans lequel les buses d'extinction présentent un angle de dispersion horizontal inférieur à 360°.

2. Système d'extinction d'incendie selon la revendication 1, **caractérisé en ce que** le système d'extinction d'incendie présente une commande (15) qui est réalisée pour commander le dispositif d'extinction en fonction du lieu de détection, dans lequel la commande (15) est de préférence réalisée pour déterminer dans quelle zone d'extinction (22, 23) se trouve le lieu de détection et pour commander le dispositif d'extinction de telle sorte que l'agent extincteur est distribué dans la zone d'extinction (22, 23) déterminée.

3. Système d'extinction d'incendie pour un toit avec une installation solaire dont les panneaux solaires sont disposés en rangées sur le toit, dans lequel les rangées de panneaux solaires sont à orienter dans une direction de guidage (21), dans lequel le système d'extinction d'incendie présente :
- un dispositif d'extinction avec un groupe de sorties d'agent extincteur (8) pour la distribution d'un agent extincteur sur le toit (1), dans lequel le groupe de sorties d'agent extincteur (8) est associé à une zone d'extinction spatiale, dans lequel un système de tuyaux (5) pour guider l'agent extincteur vers les sorties d'agent extincteur (8) respectives est associé à la zone d'extinction, dans lequel le système de tuyaux (5) de la zone d'extinction est réalisé de telle sorte que les sorties d'agent extincteur (8) sont disposées le long de lignes décalées les unes par rapport aux autres perpendiculairement à la direction de guidage (21), qui s'étendent dans la direction de guidage (21), et
- un dispositif de détection (11) qui est réalisé pour détecter, en tant que lieu de détection, un lieu où un incendie s'est produit ou est susceptible de se produire,
**caractérisé en ce que** les sorties d'agent extincteur (8) comprennent des buses d'extinction qui distribuent alternativement de l'agent extincteur tout en pointant dans des directions opposées dans respectivement une zone de couverture (9), si bien qu'il existe plusieurs points de sortie d'agent extincteur (8) le long d'un tuyau respectif, dans lequel une seule buse d'extinction est disposée sur un des plusieurs points de sortie d'agent extincteur (8) de telle sorte qu'elle pointe dans une direction déterminée par rapport à une projection dans un plan horizontal, dans lequel les buses d'extinction présentent un angle de dispersion horizontal inférieur ou égal à 270°, dans lequel les zones de couverture (9) de buses d'extinction adjacentes se chevauchent.

4. Système d'extinction d'incendie selon l'une quelconque des revendications précédentes, **caractérisé en ce que** le dispositif de détection (11) présente plusieurs détecteurs (12) pour détecter l'endroit où un incendie s'est produit ou est susceptible de se produire, dans lequel les détecteurs (12) sont disposés le long de lignes droites, et de préférence **caractérisé en ce que** les détecteurs (12) sont disposés le long de lignes droites qui s'étendent dans la direction de guidage (21).

5. Système d'extinction d'incendie selon l'une quelconque des revendications précédentes, **caractérisé en ce que** le dispositif d'extinction est réalisé pour utiliser de la mousse d'extinction comme agent extincteur, dans lequel le dispositif d'extinction présente un système de tuyaux, une vanne d'eau (17) et un générateur de mousse (20) pour générer de la mousse d'extinction, dans lequel le système de tuyaux est réalisé pour amener de l'eau de la vanne d'eau (17) au générateur de mousse (20) et de la mousse d'extinction du générateur de mousse (20) aux sorties d'agent extincteur, caractérisé de préférence en outre **en ce que** les sorties d'agent extincteur sont réalisées de manière à contribuer également à la production de mousse.

6. Système d'extinction d'incendie selon l'une quelconque des revendications précédentes, dans la mesure où elles renvoient à la revendication 1, **caractérisé en ce que** i) le dispositif d'extinction est réalisé de telle sorte que a) l'agent extincteur peut être distribué au moyen de sorties d'agent extincteur (8) d'un groupe indépendamment d'une distribution de l'agent extincteur au moyen de sorties d'agent extincteur (108) d'un autre groupe et b) l'agent extincteur peut être distribué au moyen de sorties d'agent extincteur (108) de l'autre groupe en fonction d'une distribution de l'agent extincteur au moyen de sorties d'agent extincteur (8) de l'un groupe, ou que ii) le dispositif d'extinction est réalisé de telle sorte que a) l'agent extincteur peut être distribué au moyen de sorties d'agent extincteur (8) d'un groupe indépendamment d'une distribution de l'agent extincteur au moyen de sorties d'agent extincteur (108) d'un autre groupe et b) l'agent extincteur peut être distribué au moyen de sorties d'agent extincteur (108) de l'autre groupe indépendamment d'une distribution de l'agent extincteur au moyen des sorties d'agent extincteur (8) de l'un groupe.

7. Système d'installation solaire pour un toit (1), dans lequel le système d'installation solaire comprend :
- un système d'extinction d'incendie selon l'une quelconque des revendications 1 à 6,
- au moins un panneau solaire (10).

8. Système d'installation solaire selon la revendication 7, **caractérisé en ce que** le dispositif de détection (11) présente plusieurs détecteurs (12) pour détecter le lieu de détection, dans lequel les détecteurs (12) sont installés au panneau solaire (10) de telle manière que les détecteurs (12) sont disposés sous le panneau solaire (10) une fois installés sur le toit (1).

9. Système d'installation solaire selon la revendication 8, **caractérisé en ce que** le panneau solaire (10) est disposé de manière oblique sur le toit (1) de telle manière qu'il présente un côté supérieur (44) et un côté inférieur (43) opposé, dans lequel les détecteurs (12) sont disposés en dessous du panneau solaire (10) dans la zone du côté supérieur (44).

10. Système d'installation solaire selon l'une quelconque des revendications 7 à 9, **caractérisé en ce que** le dispositif d'extinction est réalisé de sorte que, après l'installation du système d'installation solaire sur le toit (1), les sorties d'agent extincteur (8) sont disposées en dessous du panneau solaire (10) de telle sorte que l'agent extincteur peut être distribué dans une zone en dessous du panneau solaire (10).

11. Système d'installation solaire selon l'une quelconque des revendications 7 à 10, **caractérisé en ce que** le système d'installation solaire présente plusieurs panneaux solaires (10) qui sont disposés côte à côte dans la direction de guidage (21).
